# EUROPEAN PATENT SPECIFICATION

(11) **EP 2 637 504 B1**
(45) Date of publication and mention of the grant of the patent: **25.07.2018**
(21) Application number: 11839738.9
(22) Date of filing: 10.11.2011
(51) Int. Cl.: A01N 25/02, A01N 25/04, A01N 59/20, A01N 57/20, A01N 47/36, A01N 43/653, A01N 53/08, A01N 37/34, A01P 3/00, A01P 7/00, A01P 13/00

(54) **AGRICULTURAL PESTICIDE COMPOSITIONS**
LANDWIRTSCHAFTLICHE PESTIZIDZUSAMMENSETZUNGEN
COMPOSITIONS DE PESTICIDE AGRICOLE

(30) Priority: 12.11.2010 US 456776 P
(43) Date of publication of application: 18.09.2013
(73) Proprietor: Rhodia Operations, 93306 Aubervilliers (FR)
(72) Inventor: WU, Dan, Carmel IN 46032 (US); SHANMUGANANDAMURTHY, Krishnamurthy, Plainsboro NJ 08536 (US); GOYAL, Rajesh, Bensalem PA 19020 (US); BRAMATI, Valerio, I-20020 Arese Milan (IT)
(74) Representative: Gillard, Richard Edward
(86) International application number: PCT/US2011/001888
(87) International publication number: WO 2012/064370

(56) References cited:
- WO-A1-2011/028286
- US-A- 5 455 286
- US-A- 5 455 286
- US-A- 6 074 987
- US-A1- 2009 298 695
- US-A1- 2009 298 695
- US-A1- 2009 324 509

## Description

### Field of the Invention

This invention relates to agricultural pesticide compositions.

### Background of the Invention

Water soluble polymers, particularly polysaccharide polymers, such as, for example, guar, guar derivatives, and poly(acrylamide) polymers are know to be effective as deposition aids, such as, e.g., drift control agents, anti-rebound agents, and/or "spreader-stickers", in spray applied agricultural pesticide compositions, see, for example, US Patent No. 5,550,224, (Hazen), US Patent No. 5,874,096 (Hazen), and US Patent No. 6,391,962 (Zerrer et. al.).

In many applications, a polysaccharide polymer in the form of a dry powder is added to an aqueous pesticide composition in the field and dissolved by mixing the composition.

In some applications, it would desirable to provide a liquid pesticide concentrate that has a high polymer content and that could simply be diluted to the desired end-use concentration. This approach is difficult in the case of aqueous compositions, in that concentrated aqueous polysaccharide polymer solutions tend to be highly viscous and difficult to handle. US Patent No. 6,364,926 (Gryzik, et. al.) discloses concentrated liquid compositions comprising from about 25 to 35% of an ammonium salt and up to 2.5 wt% of a drift control agent, such as a guar gum. WO2007/031438 (Rose, et. al.) discloses concentrated liquid compositions that comprise a pesticide active ingredient, a spray drift control agent comprising at least one cationic polymer that has been formed from ethylenically unsaturated monomers, and a cationic surfactant.

There is a continuing interest in providing concentrated pesticide compositions that contain a pesticidally active ingredient and a spray drift control polymer in a convenient form that exhibits good handling properties and good storage stability.
WO 2011/028286 discloses a composition containing an incompletely hydrated water soluble polymer suspended in a liquid medium. US 5,455,286 discloses a composition comprises a bioactive agent, a hydrophilic polymer in an incompletely hydrated state and a substantially water-miscible solvent system. US 2009/298695 discloses a substantially dry, flowable adjuvant composition comprising, based on 100 parts by weight ("pbw") of the adjuvant composition: (a) from about 25 pbw to about 75 pbw of a polysaccharide and (b) from about 75 pbw to about 20 pbw of a salt composition.

### Summary of the Invention

In a first aspect, the present invention is directed to a composition comprising a pesticide, an incompletely hydrated water soluble polymer suspended in an aqueous liquid medium, a suspending agent, an emulsifier and a hydration inhibitor. The polymer, which is a polysaccharide polymer or a poly(acrylamide) polymer is a deposition aid for the pesticide and is present in an amount of from greater than 0 parts by weight to 30 parts by weight. The aqueous liquid medium comprises water and a water immiscible organic liquid. The suspending agent is selected from fumed silica, inorganic colloidal or colloid-forming particles, rheology modifier polymers, and mixtures thereof, and is present from 0 parts by weight to 10 parts by weight based on 100 parts by weight of the composition. The hydration inhibitor is selected from surfactants, water soluble non-surfactant salts, water dispersible organic liquids, and mixtures thereof, and is present in an amount of from greater than 0 to 70 parts by weight. The pesticide is present from 25 to 55 parts by weight based on 100 parts of the composition. The composition is obtainable by the method of mixing the pesticide with the water, mixing the water soluble polymer with the water immiscible organic liquid, and combining the mixture of pesticide and water with the mixture of water soluble polymer and water immiscible organic liquid to form the composition.

In one embodiment, the composition is concentrated blend of a pesticide and a polymeric drift control and/or deposition aid that is stable, has a low viscosity, is easily transportable, is pourable and pumpable under field conditions, and is dilutable with water under field conditions to form a dilute pesticide composition for spray application to target pests.

In one embodiment, the present invention is directed to a composition, comprising, based on 100 parts by weight of the composition, from greater than 0 to about 70 parts by weight of a pesticide and from greater than 2.5 to about 8 pbw of a guar polymer suspended in an aqueous medium, said polymer having a weight average molecular weight of from about 100,000 to about 5,000,000 grams per mole and said composition exhibiting:
(a) a viscosity of greater than or equal to 5 Pa.s at a shear rate of less than 0.01 s⁻¹, and
(b) a viscosity of less than 5 Pa.s at a shear rate of greater than 10 s⁻¹.

In one embodiment, the present invention is directed to a pesticide composition, comprising :
an aqueous medium,
a pesticide comprising 25 to 55 parts by weight of one or more water soluble pesticide salts selected from water soluble salts of glyphosate, glufosinate, dicamba, and mixtures thereof dissolved in the liquid medium,
a water soluble polymer selected from polyacrylamide polymers, non-derivatized guar polymers, derivatized guar polymers, and mixtures thereof, wherein at least a portion of the water soluble polymer is in the form of particles and at least a portion of such particles are dispersed in the liquid medium,
a suspending agent selected from silicas, inorganic colloidal or colloid-forming particles, rheology modifier polymers, water soluble polysaccharide polymers other than derivatized or non-derivatized guar polymers, and mixtures thereof dissolved or dispersed in the liquid medium, and
a hydration inhibitor selected from surfactants, water soluble non-surfactant salts other than the water soluble pesticide salts, water dispersible organic liquids, and mixtures thereof dissolved or dispersed in the liquid medium. Wherein, the composition is obtainable by the method of mixing the pesticide with the water, mixing the water soluble polymer with the water immiscible organic liquid, and combining the mixture of pesticide and water with the mixture of water soluble polymer and water immiscible organic liquid.

### Brief description of the Drawings

FIG. 1 shows a plot of viscosity, expressed in Pascal-seconds (Pa.s), vs. shear rate, expressed in reciprocal seconds (1/s), for the composition of Example 1.
FIG. 2 shows a plot of shear rate (in reciprocal seconds (1/s)) vs. shear stress, expressed in Pascals (Pa), for the composition of Example 1.
FIG. 3 shows a plot of viscosity, expressed in Pascal-seconds (Pa.s), vs. shear rate, expressed in reciprocal seconds (1/s), for the composition of Example 2.
FIG. 4 shows a plot of shear rate (in reciprocal seconds (1/s)) vs. shear stress, expressed in Pascals (Pa), for the composition of Example 2.
FIG. 5 shows a plot of viscosity, expressed in Pascal-seconds (Pa.s), vs. shear rate, expressed in reciprocal seconds (1/s), for the composition of Example 3.

### Detailed Description of Invention and Preferred Embodiments

As used herein, "liquid medium" means a medium that is in the liquid phase at a temperature of 25°C and a pressure of one atmosphere. The liquid medium may be a non-aqueous liquid medium or an aqueous liquid medium.

The liquid medium is an aqueous liquid medium. As used herein, the terminology "aqueous medium" means a single phase liquid medium that contains more than a trace amount of water, typically, based on 100 pbw of the aqueous medium, more than 0.1 pbw water. Suitable aqueous media more typically comprise, based on 100 pbw of the aqueous medium, greater than about 5 pbw water, even more typically greater than 10 pbw water. In one embodiment, the aqueous emulsion comprises, based on 100 pbw of the aqueous medium, greater than 40 pbw water, more typically, greater than 50 pbw water. The aqueous medium may, optionally, further comprise water soluble or water miscible components dissolved in the aqueous medium. The terminology "water miscible" as used herein means miscible in all proportions with water. Suitable water miscible organic liquids include, for example, (C₁-C₆)alcohols, such as methanol, ethanol, propanol, and (C₁-C₆)polyols, such as glycerol, ethylene glycol, propylene glycol, and diethylene glycol,

In one embodiment, the liquid medium comprises a combination of water and one or more water insoluble or water immiscible liquids, and, optionally, one or more water miscible organic liquids, wherein the combined aqueous medium and water insoluble or water immiscible components form a micro emulsion, or a multi-phase system such as, for example, an emulsion, a suspension or a suspoemulsion, in which the aqueous medium is in the form of a discontinuous phase dispersed in a continuous phase of the water insoluble or water immiscible component, or, more typically, the water insoluble or water immiscible component is in the form of a discontinuous phase dispersed in a continuous phase of the aqueous medium.

Suitable pesticides are biologically active compounds used to control agricultural pests and include, for example, herbicides, plant growth regulators, crop desiccants, fungicides, bacteriocides, bacteriostats, insecticides, and insect repellants, as well as their water soluble salts and esters. Suitable pesticides include, for example, triazine herbicides such as metribuzin, hexaxinone, or atrazine; sulfonylurea herbicides such as chlorsulfuron; uracils such as lenacil, bromacil, or terbacil; urea herbicides such as linuron, diuron, siduron, or neburon; acetanilide herbicides such as alachlor, or metolachlor; thiocarbamate herbicides such as benthiocarb, triallate; oxadiazolone herbicides such as oxadiazon; phenoxyacetic acids diphenyl ether herbicides such as fluazifop, acifluorfen, bifenox, or oxyfluorfen; dinitro aniline herbicides such as trifluralin; organophosphonate herbicides such as glufosinate salts and esters and glyphosate salts and esters; dihalobenzonitrile herbicides such as bromoxynil, or ioxynil, benzoic acid herbicides such as dicamba, dipyridilium herbicides such as paraquat. Suitable fungicides include, for example, nitrilo oxime fungicides such as cymoxanil; imidazole fungicides such as benomyl, carbendazim, or thiophanate-methyl; triazole fungicides such as triadimefon; sulfenamide fungicides, such as captan; dithio-carbamate fungicides such as maneb, mancozeb, or thiram; chloronated aromatic fungicides such as chloroneb; dichloro aniline fungicides such as iprodione, strobilurin fungicides such as kresoxim-methyl, trifloxystrobin or azoxystrobin; chlorothalonil; copper salt fungicides such as copper oxychloride; sulfur; phenylamides; and acylamino fungicides such as metalaxyl or mefenoxam. Suitable insecticides, include, for example, carbamate insecticides, such as methomyl, carbaryl, carbofuran, or aldicarb; organo thiophosphate insecticides such as EPN, isofenphos, isoxathion, chlorpyrifos, or chlormephos; organophosphate insecticides such as terbufos, monocrotophos, or terachlorvinphos; perchlorinated organic insecticides such as methoxychlor; synthetic pyrethroid insecticides such as fenvalerate, abamectin or emamectin benzoate, neonicotinoide insecticides such as thiamethoxam or imidacloprid; pyrethroid insecticides such as lambda-cyhalothrin, cypermethrin or bifenthrin, and oxadiazine insecticides such as indoxacarb, imidachlopryd, or fipronil. Suitable miticides include, for example, propynyl sulfite miticides such as propargite; triazapentadiene miticides such as amitraz; chlorinated aromatic miticides such as chlorobenzilate, or tetradifan; and dinitrophenol miticides such as binapacryl. Suitable nematicides include carbamate nematicides, such as oxamyl.

Pesticide compounds are, in general, referred herein to by the names assigned by the International Organization for Standardization (ISO). ISO common names may be cross-referenced to International Union of Pure and Applied Chemistry ("IUPAC") and Chemical Abstracts Service ("CAS") names through a number of sources.

In one embodiment, the pesticide comprises one or more compounds selected from herbicides, plant growth regulators, crop desiccants, fungicides, bacteriocides, bacteriostats, insecticides, miticides, nematocides, insect repellants, and mixtures thereof.

In one embodiment, the pesticide comprises one or more compounds that are soluble in water.

In one embodiment, the pesticide is an herbicide or a mixture of herbicides, typically selected from glyphosate, glufosinate, dicamba, ,their respective water soluble salts and esters, and mixtures thereof.

In one embodiment, the pesticide composition comprises a glyphosate herbicide selected from potassium salt of glyphosate, the sodium salt of glyphosate, the isopropyl amine salt of glyphosate, the ammonium salt of glyphosate, and mixtures thereof.

In one embodiment, the pesticide composition comprises a mixture of one or more water soluble salts or esters of glyphosate and one or more water soluble salts or esters of dicamba.

In one embodiment, the pesticide composition comprises a mixture of one or more water soluble salts or esters of glufosinate, such as, for example, the ammonium salt of glufosinate, and one or more pesticide compounds selected from the water soluble salts or esters of glyphosate, and the water soluble salts or esters of dicamba

In one embodiment, the pesticide comprises one or more compounds that are insoluble in water, such as for example, chlorothalonil, nicosulfuron, tebuconazole, cypermethrin, azoxystrobin, atrazine, copper oxychloride, metamitron, carbendazim, diuron, and mixtures thereof. In one embodiment, the pesticide comprises one or more water insoluble pesticide compounds selected from chlorothalonil, nicosulfuron, tebuconazole, cypermethrin, copper oxychloride, and mixtures thereof,

In one embodiment, the composition of the present invention comprises, based on 100 pbw of the composition, from about 25 to about 55 pbw of a pesticide.

As used herein, the term "hydration" in reference to the water soluble polymer component of the present invention means association of substituent groups, typically hydrophilic subsitutent groups, such as hydroxyl groups, of the water soluble polymer with water molecules, such as water molecules of the aqueous medium through, for example, hydrogen bonding. The degree to which the water soluble polymer is hydrated can range from non-hydrated to completely hydrated, with degrees of partial hydration extending between the two extremes. As discussed more fully below, the water soluble polymer is capable of contributing to the viscosity of the composition of the present invention with the magnitude of the contribution being dependent on the degree of hydration of the water soluble polymer. The degree of hydration of the water soluble polymer can thus be characterized based on the magnitude of the contribution that the water soluble polymer makes to the viscosity of the composition:
(a) As referred to herein a "non-hydrated" water soluble polymer makes no significant contribution to the viscosity of the composition. In general, the non-hydrated water soluble polymer would be in the form of a discontinuous phase, for example, discrete particles, that is dispersed in a continuous phase of the liquid medium, ideally with no interaction between the hydrophilic substituents of the polymer and any water molecules present in the liquid medium. In the case of an aqueous medium, there will generally be at least some interaction between the hydrophilic groups of polymer and water molecules of the aqueous medium at interfaces between the phases, for example, at the outer surfaces of the particles. It is believed that in the case of a non-hydrated water soluble polymer, interaction among the hydrophilic substituent groups of the non-hydrated water soluble polymer dominates over interaction between the hydrophilic substituent groups of the polymer and any water molecules present in the aqueous medium, the polymer chains of the non-hydrated water soluble polymer are in a compact, folded conformation, and, in the case where the liquid medium is an aqueous medium, the non-hydrated water soluble polymer is not dissolved in the aqueous medium and remains in the form of a discontinuous phase dispersed in the continuous phase of the aqueous medium.
(b) As referred to herein, a "completely hydrated" water soluble polymer makes the maximum contribution to the viscosity of the composition that the water soluble polymer is capable of making. It is believed that in a completely hydrated water soluble polymer, association between the hydrophilic substituent groups of the water soluble polymer and water molecules dominates over interaction among the hydrophilic substituent groups, that the polymer chains of a completely hydrated water soluble polymer are thus in an unfolded, random coil conformation, and in the case where the liquid medium is an aqueous medium, the aqueous medium and completely hydrated water soluble polymer form a single phase, that is, the completely hydrated water soluble polymer is dissolved in the aqueous medium.
(c) As referred to herein, a "partially hydrated" water soluble polymer is a water soluble polymer wherein some of the hydrophilic substituent groups of the polymer are associated with water molecules. At a relatively low level of hydration, the partially hydrated water soluble polymer makes a relatively small contribution to the viscosity of the composition, while at a relatively high level of hydration, the viscosity contribution of a given amount of a partially hydrated water soluble polymer in a given medium approaches, but is less than, the maximum contribution that the amount of water soluble polymer is capable of making in that medium when completely hydrated. It is believed that with increasing hydration, particles of the water soluble polymer swell, an increasing number of hydrophilic substituent groups of the water soluble polymer, including hydrophilic substituent groups within the mass of swollen water soluble polymer, become associated with water molecules, and, as complete hydration is approached, the water soluble polymer chains progressively unfold and approach an unfolded, randomly coiled configuration.

"Non-hydrated" and "partially hydrated" are collectively referred to herein as "incompletely hydrated". A "hydration inhibitor", as referred to herein is any compound that may be added to an aqueous medium to inhibit hydration of a water soluble polymer in the aqueous medium.

The degree of hydration of the water soluble polymer can be characterized by viscosity measurements. For example, the viscosity of a given amount of a water soluble polymer, in a given amount of an aqueous medium, in the presence of a given amount of a proposed hydration inhibitor, and under given shear conditions, as described in more detail below (the "test composition"), can be compared to the viscosity of the same amount of the water soluble polymer in the same amount of the aqueous medium in the absence of the proposed hydration inhibitor (the "baseline composition"). If the viscosity of the test composition is equal to that of the baseline composition, then the water soluble polymer of the test composition is deemed to be completely hydrated (and the proposed hydration inhibitor is ineffective in the amount tested to inhibit hydration of the polymer). If the viscosity of the test composition is less than that of the baseline composition, then the water soluble polymer of the test composition is deemed to be incompletely hydrated (and the proposed hydration inhibitor is effective in the amount tested to inhibit hydration of the polymer).

In one embodiment, the incompletely hydrated water soluble polymer comprises solid particles of the water soluble polymer. The presence of such particles can be detected by various means, such as for example, by viewing a sample of the composition of the present invention under an optical microscope.

In one embodiment, the liquid medium is an aqueous liquid medium and at least a portion of the water soluble polymer is in the form of particles of the water soluble polymer. In one embodiment, the liquid medium is an aqueous liquid medium, at least a portion of the water soluble polymer is in the form of particles of the water soluble polymer, and at least a portion of such particles are dispersed, more typically suspended, in the aqueous liquid medium. The presence of such particles in the composition of the present invention is detectable by, for example, optical microscopy.

In one embodiment, the composition of the present invention exhibits a viscosity of less than 10 Pa.s, more typically from about 0.1 to less than 10 Pa.s, and even more typically from about 0.1 to less than 5 Pa.s, at a shear rate of greater than or equal to 10 s⁻¹.

In one embodiment, the composition of the present invention exhibits a non-Newtonian "shear thinning" viscosity, that is, a viscosity that, within a given range of shear stress, decreases with increasing shear stress. Two general generally recognized categories of flow behavior, that is, plastic flow behavior and pseudoplastic flow behavior, each include shear thinning flow behavior.

In one embodiment, the composition of the present invention exhibits plastic flow behavior. As used herein, the term "plastic" in reference to flow behavior of a composition means the composition that exhibits a characteristic "yield strength", that is, a minimum shear stress required to initiate flow of the composition, and exhibits shear thinning behavior over some range of shear stress above the yield strength. A plastic composition exhibits no flow when subjected to shear stress below its yield strength, and flows when subjected to shear stress above its yield strength, wherein, over an intermediate range of shear stress above its yield strength, the composition typically exhibits a non-Newtonian viscosity that decreases with increasing shear stress, that is, shear thinning behavior, and, at shear stresses above the intermediate range of shear stress, the composition may exhibit a viscosity that does not vary with shear stress, that is, Newtonian flow behavior.

In one embodiment the composition of the present invention exhibits pseudoplastic flow behavior. As used herein, the term "pseudoplastic" in reference to the flow behavior of a composition means that the composition exhibits a viscosity that decreases with increasing shear stress, that is, shear thinning behavior.

In each case, a composition having plastic or pseudoplastic rheological properties resists flow at low shear stress, but that when subjected to an elevated shear stress, such as being shaken in a bottle or squeezed through an orifice, the composition flows and can be easily pumped, poured, or otherwise dispensed from a container. In general, sedimentation or storage condition is a low shear process, having a shear rate in the range of from about 10⁻⁶ reciprocal seconds (1/s or, equivalently, s⁻¹) to about 0.01 s⁻¹ and pumping or pouring is a relatively high shear process with a shear rate in the range of greater than or equal to about 1 s⁻¹, more typically from 100s⁻¹ to 10,000 s⁻¹, and even more typically, from 100s⁻¹ to 1,000 s⁻¹.

In one embodiment, the composition of the present invention comprises from about 1 pbw, or from about 1.5 pbw, or from about 2 pbw, or from greater than 2.5 pbw, to about 30 pbw, or to about 25 pbw, or to about 20 pbw, or to about 15 pbw, or to about 12 pbw, of the water soluble polymer and exhibits a viscosity of less than 10 Pa.s, more typically from about 0.1 to less than 10 Pa.s, and even more typically from about 0.1 to less than 5 Pa.s, at a shear rate of greater than or equal to 10 s⁻¹.

In one embodiment, the composition of the present invention resists sedimentation or separation under low shear stress storage conditions yet is pumpable under elevated shear stress condition. In one such embodiment, the composition of the present invention exhibits a viscosity of from about 1 to about 1000 Pa.s, more typically from 5 to about 800 Pa.s, even more typically from about 10 to about 500 Pa.s, at a shear rate of less than or equal to 0.01 s⁻¹ and exhibits a viscosity that is less than the viscosity exhibited at a shear rate of less than or equal to 0.01 s⁻¹, typically a viscosity of less than 10 Pa.s, more typically from about 0.1 to less than 10 Pa.s, and even more typically from about 0.1 to less than 5 Pa.s, at a shear rate of greater than or equal to 10 s⁻¹, more typically, greater than or equal to 100 s⁻¹.

In one embodiment, the composition of the present invention exhibits a viscosity greater than or equal to 10 Pa.s at a shear rate of less than or equal to 0.01 s⁻¹ and exhibits a viscosity of less than 10 Pa.s at a shear rate of greater than or equal to 10 s⁻¹, more typically, greater than or equal to 100 s⁻¹.

In one embodiment, the composition of the present invention exhibits a viscosity greater than or equal to 5 Pa.s at a shear rate of less than or equal to 0.01 s⁻¹ and exhibits a viscosity of less than 5 Pa.s at a shear rate of greater than or equal to 10 s⁻¹, more typically, greater than or equal to 100 s⁻¹.

In one embodiment, the composition of the present invention exhibits a viscosity greater than or equal to 1 Pa.s at a shear rate of less than or equal to 0.01 s⁻¹ and exhibits a viscosity of less than 1 Pa.s at a shear rate of greater than or equal to 10 s⁻¹, more typically, greater than or equal to 100 s⁻¹.

In one embodiment, the composition exhibits a yield strength of greater than 0 Pa, more typically greater than 0.01 Pa, even more typically from about 0.01 to about 10 Pa, still more typically from about 0.1 to about 5 Pa.

In one embodiment, the composition of the present invention also exhibits thixotropic properties. As used herein, the term "thixotropic" in reference to the flow properties of a composition means that the composition exhibits non-Newtonian shear thinning viscosity that is time dependent, i.e., the decrease in the viscosity of the composition that is brought about by increasing shear stress is reversible and the composition returns to its original state when the shear stress is discontinued.

The composition of the present invention further comprises a suspending agent, typically dispersed in the liquid medium, in an amount effective to impart shear thinning viscosity, to impart yield strength, or to impart shear thinning viscosity and yield strength to the composition, generally in an amount, based on 100 pbw of the composition of the present invention, of from greater than 0 to about 10 pbw, more typically from about 0.2 to about 5 pbw, and even more typically, from about 0.5 to about 5 pbw, of the suspending agent.

The suspending agent is selected from silica, more typically fumed silica, inorganic colloidal or colloid-forming particles, more typically, clays, rheology modifier polymers, and mixtures thereof. In one embodiment, wherein the liquid medium is an aqueous medium, the suspending agent comprises a polysaccharide polymer that differs from the water soluble polymer and that is more readily hydrolyzed than the water soluble polymer. For example, Xanthan gum may be dissolved in an aqueous medium and used as a suspending agent to suspend incompletely hydrolyzed guar particles in the aqueous medium.

In one embodiment, wherein the liquid medium is an aqueous medium and the water soluble polymer is incompletely hydrolyzed and itself performs the function of suspending agent by forming a water swollen, viscous mass, said viscous mass having a lower viscosity than would the same amount of the same water soluble polymer in a fully hydrated state, and a separate suspending agent is not required.

The composition of the present invention further comprises a hydration inhibitor, typically dissolved in the liquid medium, in an amount based on 100 pbw of the aqueous medium, of from greater than 0 to 70 pbw, which is effective to inhibit hydration of the water soluble polymer, more typically the water soluble polysaccharide polymer, in the liquid medium so that the water soluble polymer component of the composition of the present invention is incompletely hydrated. The hydration inhibitor is preferably used in an amount of from about 15 to about 60 pbw, and even more typically, from about 20 to about 50 pbw, of the hydration inhibitor. Use of a hydration inhibitor component is typically of most benefit in those embodiments of the composition of the present invention wherein the liquid medium is an aqueous medium.

The hydration inhibitor is selected from surfactants, water soluble non-surfactant salts, water dispersible organic liquids, and mixtures thereof. The terminology "non-surfactant salts" as used herein means salts that are not anionic, cationic, zwitterionic or amphoteric surfactants includes active ingredients, such as pesticide salts, whose primary activity is other than modification of interfacial surface tension. The terminology "water dispersible organic liquids" includes water miscible organic liquids and water immiscible organic liquids that may be dispersed in water, such as for example, in the form of an emulsion of the water immiscible organic liquid in water.

It will be appreciated that the suspending agent and/or the hydration inhibitor component of the composition of the present invention may each perform more than one function. For example, the pesticide may be a non-surfactant salt compound that also functions as a hydration inhibitor in the composition of the present invention.

The composition of the present invention comprises, based on 100 pbw of the composition, of from greater than 0 pbw, more typically from about 0.1 pbw, or from about 1 pbw, even more typically from about 2 pbw, and still more typically from greater than 2.5 pbw, or from about 3 pbw to 30 pbw, more typically to about 25, even more typically to about 20 pbw, and still more typically about 12 pbw, of the water soluble polymer.

The water soluble polymer is a deposition aid for the pesticide. In one embodiment, the water soluble polymer enhances drift control of spray applied pesticide composition and/or provides "anti-rebound" properties to the spray applied pesticide composition, that is, reduces rebound of the spray applied pesticide from a target substrate, such as e.g., the foliage of a target plant. In one embodiment, the polymer comprises a spray drift control agent and/or anti-rebound agent selected from polysaccharide polymers and polyacrylamide polymers.

In one embodiment, the polymer is a polysaccharide polymer. Polysaccharide polymer typically have a large number of hydrophilic, typically, hydroxyl, substituent groups, per molecule, more typically one or more hydroxyl group per monomeric unit of the polysaccharide polymer.

In one embodiment, wherein the polysaccharide polymer has a weight average molecular weight of up to about 10,000,000 grams per mole (g/mol) more typically of up to about 5,000,000 g/mol, more typically from about 100,000 to about 4,000,000 g/mol, even more typically from about 500,000 to about 3,000,000 g/mol, the composition of the present invention comprises, based on 100 pbw of the composition, up to about 15 pbw, more typically from about 1 to about 12 pbw, and even more typically, from about 2 to about 10 pbw and still more typically from greater than 2.5 to about 8 pbw of the polysaccharide polymer. The weight average molecular weight of a polysaccharide polymer may be determined by known methods, such as by gel permeation chromatography with light scattering or refractive index detection. As generally used herein, i.e., in the absence of an explicit limitation such as "derivatized" or "non-derivatized", the term "guar polymer" refers collectively to non-derivatized polysaccharide polymers and derivatized polysaccharide polymers.

In one embodiment, wherein the polysaccharide polymer is a depolymerized guar having a molecular weight of less than about 100,000, the composition of the present invention comprises, based on 100 pbw of the composition, up to about 30 pbw, more typically from about 0.1 pbw to about 25 pbw, or from about 1 to about 25 pbw, even more typically, from about 1.5 to about 20 pbw, still more typically from about 2 pbw to about 15 pbw, and still more typically from greater than 2.5 pbw to about 12 pbw, or from about 3 pbw to about 12 pbw, of the polysaccharide polymer.

In one embodiment, the composition of the present invention comprises from greater than 2.5 to about 8 pbw of a guar polymer suspended in a liquid medium, more typically an aqueous medium, wherein the polymer has a weight average molecular weight of from about 100,000, more typically from about 500,000, to about 5,000,000 g/mol, more typically to about 4,000,000 g/mol, and even more typically to about 3,000,000 g/mol, and the composition exhibits a viscosity of greater than or equal to 5 Pa.s, more typically greater than or equal to 10 Pa.s, at a shear rate of less than 0.01 s⁻¹, more typically less than 0.001 s⁻¹, and a viscosity that is less than the viscosity exhibited at a shear rate of less than or equal to 0.01 s⁻¹, typically a viscosity of less than 10 Pa.s, more typically less than 5 Pa.s, at a shear rate of greater than 10 s⁻¹, more typically greater than 100 s⁻¹.

A composition, comprising, based on 100 pbw of the composition:
from greater than 0 pbw, or greater than or equal to about 10 pbw, or greater than or equal to about 30 pbw, a liquid medium,
from greater than 0 pbw, or from about 2 pbw, or from about 10 pbw, or from about 15 pbw or from about 25 pbw, to about 70 pbw, or to about 65 pbw, or to about 60 pbw, or to about 55 pbw, of a pesticide dissolved or dispersed in the liquid medium,
from greater than 0 pbw, or from about 0.1 pbw, or from about 1 pbw, or from about 1.5 pbw, or from about 2 pbw, or from greater than 2.5 pbw, or from about 3 pbw, to about 30 pbw, or to about 25 pbw, or to about 20 pbw, or to about 15 pbw, or to about 12 pbw, of a water soluble polymer, wherein at least a portion of the water soluble polymer is incompletely hydrated, more typically wherein at least a portion of the water soluble polymer is in the form of particles, and at least a portion of such particles are dispersed, more typically, suspended, in the liquid medium,
from 0 pbw, or from about 0.1 pbw, or from about 0.2 pbw, or from about 0.5 pbw, to about 10 pbw or to about 5 pbw, of the suspending agent dissolved or dispersed in the liquid medium, and
from 0 pbw, or from about 10 pbw, or from about 15 pbw, or from about 20 pbw, to about 70 pbw, or to about 60 pbw, or to about 50 pbw, of the hydration inhibitor dissolved or dispersed in the liquid medium.
Wherein the composition is obtainable by the method of mixing the pesticide with the water, mixing the water soluble polymer with the water immiscible organic liquid, and combining the mixture of pesticide and water with the mixture of water soluble polymer and water immiscible organic liquid.

In one embodiment, the composition of the present invention comprises:
(a) a liquid medium,
(b) 25 to 55 parts by weight of a pesticide,
(c) an incompletely hydrated water soluble polymer, more typically wherein at least a portion of a water soluble polymer is in the form of particles of the water soluble polymer, at least a portion of which are dispersed, more typically suspended, in the liquid medium, and
(d) a suspending agent in an amount effective to impart shear thinning properties to the composition.
Wherein, the composition is obtainable by the method of mixing the pesticide with the water, mixing the water soluble polymer with the water immiscible organic liquid, and combining the mixture of pesticide and water with the mixture of water soluble polymer and water immiscible organic liquid.

The liquid medium is an aqueous medium and the polymer comprises a water soluble polysaccharide polymer. In one embodiment, the liquid medium is an aqueous medium and the pesticide comprises one or more a water soluble compounds. In one embodiment, the liquid medium is an aqueous medium and the pesticide comprises one or more a water insoluble compounds.

In one embodiment, the liquid medium comprises a combination of water and one or more water insoluble or water immiscible liquids, and, optionally, one or more water miscible organic liquids, and the polymer comprises a water soluble polysaccharide polymer. In one embodiment, the liquid medium comprises a combination of water and one or more water insoluble or water immiscible liquids, and, optionally, one or more water miscible organic liquids, and the pesticide comprises one or more water soluble compounds. In one embodiment, the liquid medium comprises a combination of water and one or more water insoluble or water immiscible liquids, and, optionally, one or more water miscible organic liquids, and the pesticide comprises one or more water insoluble compounds.

In one embodiment, the liquid medium is an aqueous medium and composition of the present invention comprises, based on 100 pbw of the composition:
(a) from greater than 0 pbw, more typically greater than or equal to about 10 pbw, even more typically greater than or equal to about 30 pbw, of water,
(b) from about 25 pbw to about 65 pbw of the pesticide,
(c) from greater than 0 pbw, more typically from about 0.1 pbw or from about 1 pbw, more typically from about 1.5 pbw, even more typically from about 2 pbw, and still more typically from greater than 2.5 pbw or from about 3 pbw, to about 30 pbw, more typically to about 25 pbw, more typically to about 20 pbw, even more typically to about 15 pbw, and still more typically, to about 12 pbw, of the incompletely hydrated water soluble polysaccharide polymer, more typically wherein at least a portion of a water soluble polymer is in the form of particles of the water soluble polymer, and
(d) from greater than 0 pbw, more typically from about 0.1 pbw, even more typically from about 0.2 pbw, and still more typically from about 0.5 pbw, to about 10 pbw and, more typically, to about 5 pbw, of the suspending agent.

In one embodiment, the composition of the present invention comprises:
(a) an aqueous medium,
(b) 25 to 55 parts by weight of a pesticide,
(c) an incompletely hydrated water soluble polysaccharide polymer, typically wherein at least a portion of a water soluble polysaccharide polymer is in the form of particles of the polysaccharide polymer, at least a portion of which are dispersed, more typically, suspended, in the aqueous medium,
(d) from greater than 0 to 10 parts by weight of the suspending agent, and
(e) the hydration inhibitor in an amount effective to inhibit hydration of the water soluble polysaccharide in the aqueous medium, more typically in an amount effective to prevent dissolution of the particles of the polysaccharide polymer in the aqueous medium.
Wherein, the composition is obtainable by the method of mixing the pesticide with the water, mixing the water soluble polymer with the water immiscible organic liquid, and combining the mixture of pesticide and water with the mixture of water soluble polymer and water immiscible organic liquid.

In one embodiment, the composition of the present invention comprises, based on 100 pbw of the composition:
(a) from greater than 0 pbw, more typically greater than or equal to about 10 pbw, even more typically greater than or equal to about 30 pbw, of water,
(b) from about 25 pbw to about 55 pbw of the pesticide,
(c) from greater than 0 pbw, more typically from about 0.1 pbw or from about 1 pbw, more typically from about 1.5 pbw, even more typically from about 2 pbw, and still more typically from greater than 2.5 pbw or from about 3 pbw, to about 30 pbw, more typically to about 25 pbw, more typically to about 20 pbw, even more typically to about 15 pbw, and still more typically to about 12 pbw, of the incompletely hydrated polysaccharide polymer, more typically wherein at least a portion of a polysaccharide polymer is in the form of particles of the polysaccharide polymer,
(d) from greater than 0 pbw, more typically from about 0.1 pbw, even more typically from about 0.2 pbw, and still more typically from about 0.5 pbw, to about 10 pbw and, more typically, to about 5 pbw, of the suspending agent, and
(e) from greater than 0 pbw, more typically from about 10 pbw, even more typically from about 15 pbw, and still more typically from about 20 pbw, to about 70 pbw, more typically to about 60 pbw, and even more typically to about 50 pbw, of the hydration inhibitor, wherein the amount of hydration inhibitor includes the amount of any of the pesticide of component (b) above that is a water soluble non-surfactant salt.
Wherein, the composition is obtainable by the method of mixing the pesticide with the water, mixing the water soluble polymer with the water immiscible organic liquid, and combining the mixture of pesticide and water with the mixture of water soluble polymer and water immiscible organic liquid.

In one embodiment, the composition of the present invention comprises, based on 100 pbw of the composition;
(a) from greater than 0 pbw, more typically greater than or equal to about 10 pbw, even more typically greater than or equal to about 30 pbw, water,
(b) from greater than 0 pbw to about 70 pbw, more typically from about 2 pbw to about 65 pbw or from about 10 pbw to about 60 pbw, and even more typically from about 25 pbw, to about 55 pbw, of the pesticide,
(c) from greater than 0 to about 30 pbw, more typically from about 0.1 pbw to about 25 pbw, or from about 1 to about 25 pbw, more typically, from about 1.5 to about 20 pbw, even more typically, from about 2 pbw to about 15 pbw, and still more typically from greater than 2.5 pbw to about 12 pbw or from about 3 pbw to about 12 pbw, of the incompletely hydrated polysaccharide polymer, more typically wherein at least a portion of a polysaccharide polymer is a polysaccharide polymer that is in the form of particles of the polysaccharide polymer,
(d) from greater than 0 to about 10 pbw, more typically from about 0.1 to about 10 pbw, even more typically from about 0.2 to about 5 pbw, and still more typically, from about 0.5 to about 5 pbw, of the suspending agent, and
(e) from greater than 0 to about 70 pbw, more typically from about 10 to about 70 pbw, even more typically from about 15 to about 60 pbw, and still more typically from about 20 to about 50 pbw, of the hydration inhibitor, wherein the amount of hydration inhibitor includes the amount of any of the pesticide of component (b) above that is a water soluble salt.
Wherein, the composition is obtainable by the method of mixing the pesticide with the water, mixing the water soluble polymer with the water immiscible organic liquid, and combining the mixture of pesticide and water with the mixture of water soluble polymer and water immiscible organic liquid.

In one embodiment, the suspending agent is a silica and the hydration inhibitor is a non-surfactant salt, a surfactant, a water dispersible organic liquid, a mixture of a non-surfactant salt and a surfactant, a mixture of a non-surfactant salt and a water dispersible organic liquid, or a mixture of a non-surfactant salt, a surfactant, and a water dispersible organic liquid.

In one embodiment, the suspending agent is a silica and the hydration inhibitor is a mixture of a non-surfactant salt and a surfactant.

In one embodiment, the suspending agent is a clay and the hydration inhibitor is a non-surfactant salt, a surfactant, a water dispersible organic liquid, a mixture of a non-surfactant salt and a surfactant, a mixture of a non-surfactant salt and a water dispersible organic liquid, or a mixture of a non-surfactant salt, a surfactant, and a water dispersible organic liquid.

In one embodiment, the suspending agent is a rheology modifier polymer and the hydration inhibitor is a non-surfactant salt, a surfactant, a water dispersible organic liquid, a mixture of a non-surfactant salt and a surfactant, a mixture of a non-surfactant salt and a water dispersible organic liquid, or a mixture of a non-surfactant salt, a surfactant, and a water dispersible organic liquid.

In one embodiment, the suspending agent is a mixture of a silica and a clay and the hydration inhibitor is a non-surfactant salt, a surfactant, a water dispersible organic liquid, a mixture of a non-surfactant salt and a surfactant, a mixture of a non-surfactant salt and a water dispersible organic liquid, or a mixture of a non-surfactant salt, a surfactant, and a water dispersible organic liquid.

In one embodiment, the suspending agent is a mixture of a silica and a rheology modifier and the hydration inhibitor is a non-surfactant salt, a surfactant, a water dispersible organic liquid, a mixture of a non-surfactant salt and a surfactant, a mixture of a non-surfactant salt and a water dispersible organic liquid, or a mixture of a non-surfactant salt, a surfactant, and a water dispersible organic liquid.

In one embodiment, the suspending agent is a mixture of a clay and a rheology modifier and the hydration inhibitor is a non-surfactant salt, a surfactant, a water dispersible organic liquid, a mixture of a non-surfactant salt and a surfactant, a mixture of a non-surfactant salt and a water dispersible organic liquid, or a mixture of a non-surfactant salt, a surfactant, and a water dispersible organic liquid.

In one embodiment, the suspending agent is a mixture of a silica, a clay, and a rheology modifier and the hydration inhibitor is a non-surfactant salt, a surfactant, a water dispersible organic liquid, a mixture of a non-surfactant salt and a surfactant, a mixture of a non-surfactant salt and a water dispersible organic liquid, or a mixture of a non-surfactant salt, a surfactant, and a water dispersible organic liquid.

In one embodiment, the composition of the present invention comprises, based on 100 pbw of the composition:
from greater than 0 pbw, or greater than or equal to about 10 pbw, of or greater than or equal about 30 pbw of an aqueous medium, more typically water or a mixture of water and a water miscible organic liquid,
from greater than 0 pbw, or from about 2 pbw, or from about 10 pbw, or from about 15 pbw, or from about 25 pbw, to about 70 pbw, or to about 65 pbw, or to about 60 pbw, or to about 55 pbw, of a pesticide, more typically a water soluble pesticide, even more typically one or more water soluble pesticides selected from water soluble salts of glyphosate, glufosinate, dicamba, and mixtures thereof, dissolved in the liquid medium,
from greater than 0 pbw, or from about 0.1 pbw, or from about 1 pbw, or from 1.5 pbw, or from 2 pbw, or from greater than 2.5 pbw, or from about 3 pbw, or from about 4 pbw to about 30 pbw, or to about 25 pbw, or to about 20 pbw, or to about 15 pbw, or to about 12 pbw, of a water soluble polymer, more typically a water soluble polymer selected from water soluble polysaccharide polymers and water soluble non-polysaccharide polymers, and even more typically a water soluble polymer selected from polyacrylamide polymers, non-derivatized guars, derivatized guars, and mixtures thereof, wherein such water soluble polymer is incompletely hydrated, more typically wherein at least a portion of the water soluble polymer is in the form of particles and at least a portion of such particles are dispersed, more typically, suspended, in the liquid medium,
from 0 pbw, or from greater than 0 pbw, or from about 0.1 pbw, or from about 0.2 pbw, or from about 0.5 pbw, to about 10 pbw, or to about 5 pbw, of a suspending agent, more typically of a suspending agent selected from silicas, inorganic colloidal or colloid-forming particles, rheology modifier polymers, water soluble polymers other than the water soluble polymer, and mixtures thereof dissolved or dispersed in the liquid medium, and
from 0 pbw, or from greater than 0 pbw, from about 2 pbw, or from about 5 pbw, to about 30 pbw or to about 15 pbw, or to about 10 pbw, of a hydration inhibitor, more typically a hydration inhibitor selected from surfactants, water soluble non-surfactant salts other than the water soluble pesticide salts, water dispersible organic liquids, and mixtures thereof dissolved or dispersed in the liquid medium.
Wherein, the composition is obtainable by the method of mixing the pesticide with the water, mixing the water soluble polymer with the water immiscible organic liquid, and combining the mixture of pesticide and water with the mixture of water soluble polymer and water immiscible organic liquid.

Suitable water soluble polysaccharide polymers are include, for example, galactomannans such as guars, including guar derivatives, xanthans, polyfructoses such as levan, starches, including starch derivatives, such as amylopectin, and cellulose, including cellulose derivatives, such as methylcellulose, ethylcellulose, carboxymethylcellulose, hydroxyethylcellulose, cellulose acetate, cellulose acetate butyrate, and cellulose acetate propionate.

Galactomannans are polysaccharides consisting mainly of the monosaccharides mannose and galactose. The mannose-elements form a chain consisting of many hundreds of (1,4)-β-D-mannopyranosyl-residues, with 1,6 linked -D-galactopyranosyl-residues at varying distances, dependent on the plant of origin. Naturally occurring galactomannans are available from numerous sources, including guar gum, guar splits, locust bean gum and tara gum. Additionally, galactomannans may also be obtained by classical synthetic routes or may be obtained by chemical modification of naturally occurring galactomannans.

Guar gum refers to the mucilage found in the seed of the leguminous plant *Cyamopsis tetragonolobus.* The water soluble fraction (85%) is called "guaran," which consists of linear chains of (1,4)-.β-D mannopyranosyl units-with α-D-galactopyranosyl units attached by (1,6) linkages. The ratio of D-galactose to D-mannose in guaran is about 1:2. Guar gum typically has a weight average molecular weight of between 2,000,000 and 5,000,000 g/mol. Guars having a reduced molecular weight, such as for example, from about 50,000 to about 2,000,000 g/mol are also known.

Guar seeds are composed of a pair of tough, non-brittle endosperm sections, hereafter referred to as "guar splits," between which is sandwiched the brittle embryo (germ). After dehulling, the seeds are split, the germ (43-47% of the seed) is removed by screening, and the splits are ground. The ground splits are reported to contain about 78-82% galactomannan polysaccharide and minor amounts of some proteinaceous material, inorganic salts, water-insoluble gum, and cell membranes, as well as some residual seedcoat and embryo.

Locust bean gum or carob bean gum is the refined endosperm of the seed of the carob tree, *Ceratonia siliqua.* The ratio of galactose to mannose for this type of gum is about 1:4. Locust bean gum is commercially available.

Tara gum is derived from the refined seed gum of the tara tree. The ratio of galactose to mannose is about 1:3. Tara gum is commercially available.

Other galactomannans of interest are the modified galactomannans, including derivatized guar polymers, such as carboxymethyl guar, carboxymethylhydroxypropyl guar, cationic hydroxpropyl guar, hydroxyalkyl guar, including hydroxyethyl guar, hydroxypropyl guar, hydroxybutyl guar and higher hydroxylalkyl guars, carboxylalkyl guars, including carboxymethyl guar, carboxylpropyl guar, carboxybutyl guar, and higher carboxyalkyl guars, the hydroxyethylated, hydroxypropylated and carboxymethylated derivative of guaran, the hydroxethylated and carboxymethylated derivatives of carubin, and the hydroxypropylated and carboxymethylated derivatives of cassia-gum.

Xanthans of interest are xanthan gum and xanthan gel. Xanthan gum is a polysaccharide gum produced by *Xathomonas campestris* and contains D-glucose, D-mannose, D-glucuronic acid as the main hexose units, also contains pyruvate acid, and is partially acetylated.

Levan is a polyfructose comprising 5-membered rings linked through β-2,6 bonds, with branching through β-2,1 bonds. Levan exhibits a glass transition temperature of 138°C and is available in particulate form. At a molecular weight of 1-2 million, the diameter of the densely-packed spherulitic particles is about 85 nm.

Modified celluloses are celluloses containing at least one functional group, such as a hydroxy group, hydroxycarboxyl group, or hydroxyalkyl group, such as for example, hydroxymethyl cellulose, hydroxyethyl celluloses, hydroxypropyl celluloses or hydroxybutyl celluloses.

Processes for making derivatives of guar gum splits are generally known. Typically, guar splits are reacted with one or more derivatizing agents under appropriate reaction conditions to produce a guar polysaccharide having the desired substituent groups. Suitable derivatizing reagents are commercially available and typically contain a reactive functional group, such as an epoxy group, a chlorohydrin group, or an ethylenically unsaturated group, and at least one other substituent group, such as a cationic, nonionic or anionic substituent group, or a precursor of such a substituent group per molecule, wherein substituent group may be linked to the reactive functional group of the derivatizing agent by bivalent linking group, such as an alkylene or oxyalkylene group. Suitable cationic substituent groups include primary, secondary, or tertiary amino groups or quaternary ammonium, sulfonium, or phosphinium groups. Suitable nonionic substituent groups include hydroxyalkyl groups, such as hydroxypropyl groups. Suitable anionic groups include carboxyalkyl groups, such as carboxymethyl groups. The cationic, nonionic and/ or anionic substituent groups may be introduced to the guar polysaccharide chains via a series of reactions or by simultaneous reactions with the respective appropriate derivatizing agents.

The guar may be treated with a crosslinking agent, such for example, borax (sodium tetra borate) is commonly used as a processing aid in the reaction step of the water-splits process to partially crosslink the surface of the guar splits and thereby reduces the amount of water absorbed by the guar splits during processing. Other crosslinkers, such as, for example, glyoxal or titanate compounds, are known.

In one embodiment, the polysaccharide component of the composition of the present invention is a non-derivatized galactomannan polysaccharide, more typically a non-derivatized guar gum.

In one embodiment, the polysaccharide is a derivatized galactomannan polysaccharide that is substituted at one or more sites of the polysaccharide with a substituent group that is independently selected for each site from the group consisting of cationic substituent groups, nonionic substituent groups, and anionic substituent groups.

In one embodiment, the polysaccharide component of the composition of the present invention is derivatized galactomannan polysaccharide, more typically a derivatized guar. Suitable derivatized guars include, for example, hydroxypropyl trimethylammonium guar, hydroxypropyl lauryldimethylammonium guar, hydroxypropyl stearyldimethylammonium guar, hydroxypropyl guar, carboxymethyl guar, guar with hydroxypropyl groups and hydroxypropyl trimethylammonium groups, guar with carboxymethyl hydroxypropyl groups and mixtures thereof.

The amount of derivatizing groups in a derivatized polysaccharide polymer may be characterized by the degree of substitution of the derivatized polysaccharide polymer or the molar substitution of the derivatized polysaccharide polymer.

As used herein, the terminology "degree of substitution" in reference to a given type of derivatizing group and a given polysaccharide polymer means the number of the average number of such derivatizing groups attached to each monomeric unit of the polysaccharide polymer. In one embodiment, the derivatized galactomannan polysaccharide exhibits a total degree of substitution ("DS_{T}") of from about 0.001 to about 3.0, wherein:
DS_{T} is the sum of the DS for cationic substituent groups ("DS_{cationic}"), the DS for nonionic substituent groups ("DS_{nonionic}") and the DS for anionic substituent groups ("DS_{anionic}"),
DS_{cationic} is from 0 to about 3, more typically from about 0.001 to about 2.0, and even more typically from about 0.001 to about 1.0,
DS_{nonionic} is from 0 to 3.0, more typically from about 0.001 to about 2.5, and even more typically from about 0.001 to about 1.0, and
DS_{anionic} is from 0 to 3.0, more typically from about 0.001 to about 2.0.

As used herein, the term "molar substitution" or "ms" refers to the number of moles of derivatizing groups per moles of monosaccharide units of the guar. The molar substitution can be determined by the Zeisel-GC method. The molar substitution utilized by the present invention is typically in the range of from about 0.001 to about 3.

In one embodiment, the polysaccharide polymer is in the form of particles. In one embodiment, the particles of polysaccharide polymer have an initial, that is, determined for dry particles prior to suspension in the aqueous medium, average particle size of about 5 to 200 micrometers (µm), more typically about 20 to 200 µm as measured by light scattering, and exhibit a particle size in the aqueous medium of greater than or equal to the initial particle size, that is greater than or equal to 5 µm, more typically greater or equal to than 20 µm, with any increase from the initial particle size being due to swelling brought about by partial hydration of the polysaccharide polymer in the aqueous medium.

In one embodiment, the water soluble polymer is a water soluble non-polysaccharide polymer. Suitable water soluble non-polysaccaharide polymers include, for example, lecithin polymers, poly(alkyleneoxide) polymers, such as poly(ethylene oxide) polymers , and water soluble polymers derived from ethylenically unsaturated monomers. Suitable water soluble polymers derived from ethylenically unsaturated monomers include water soluble polymers derived from acrylamide, methacrylamide, 2-hydroxy ethyl acrylate, and/or N-vinyl pyrrolidone, including homopolymers of such monomers, such as poly(acrylamide) polymers and poly(vinyl pyrrolidone) polymers, as well as copolymers of such monomers with one or more comonomers. Suitable water soluble copolymers derived from ethylenically unsaturated monomers include water soluble cationic polymers made by polymerization of at least one cationic monomer, such as a diamino alkyl (meth)acrylate or diamino alkyl (meth)acrylamide, or mixture thereof and one or more nonionic monomers, such as acrylamide or methacrylamide. In one embodiment, the non-polysaccharide polymer exhibits a weight average molecular weight of greater than about 1,000,000 g/mol, more typically greater than about 2,000,000 g/mol to about 20,000,000 g/mol, more typically to about 10,000,000 g/mol.

In one embodiment, the suspending agent component of the composition of the present invention comprises a fumed silica. Fumed silica is typically produced by the vapor phase hydrolysis of a silicon compound, e.g., silicon tetrachloride, in a hydrogen oxygen flame. The combustion process creates silicon dioxide molecules that condense to form particles. The particles collide, attach, and sinter together. The result of these processes is typically a three dimensional branched chain aggregate, typically having an average particles size of from about 0.2 to 0.3 micron. Once the aggregates cool below the fusion point of silica (1710°C), further collisions result in mechanical entanglement of the chains, termed agglomeration.

In one embodiment, suitable fumed silica has a BET surface area of from 50-400 square meters per gram (m²/g), more typically from, from about 100 m²/g to about 400 m²/g.

In one embodiment, the suspending agent component of the composition of the present invention comprises a fumed silica in an amount that is effective, either alone or in combination with one or more other suspending agents, to impart shear thinning viscosity to the composition, typically in an amount, based on 100 pbw of the composition, of from greater than 0 pbw, more typically from about 0.1 pbw, and even more typically from about 0.5 pbw, to about 10 pbw, more typically to about 5 pbw, and even more typically to about 2.5 pbw, of fumed silica.

In one embodiment, the composition of the present invention comprises, based on 100 pbw of the composition, from greater than 0 to about 10 pbw, more typically from about 0.1 to about 5 pbw, and even more typically from about 0.5 to about 2.5 pbw, of fumed silica.

In one embodiment, the suspending agent component of the composition of the present invention comprises an inorganic, typically aluminosilicate or magnesium silicate, colloid-forming clay, typically, a smectite (also known as montmorillonoid) clay, an attapulgite (also known as palygorskite) clay, or a mixture thereof. These clay materials can be described as expandable layered clays, wherein the term "expandable" as used herein in reference to such clay relates to the ability of the layered clay structure to be swollen, or expanded, on contact with water.

Smectites are three-layered clays. There are two distinct classes of smectite-type clays. In the first class of smectites, aluminum oxide is present in the silicate crystal lattice and the clays have a typical formula of Al₂(Si₂O₅)₂(OH)₂. In the second class of smectites, magnesium oxide is present in the silicate crystal lattice and the clays have a typical formula of Mg₃(Si₂O₅)(OH)₂. The range of the water of hydration in the above formulas can vary with the processing to which the clay has been subjected. This is immaterial to the use of the smectite clays in the present compositions in that the expandable characteristics of the hydrated clays are dictated by the silicate lattice structure. Furthermore, atomic substitution by iron and magnesium can occur within the crystal lattice of the smectites, while metal cations such as Na⁺, Ca⁺², as well as H⁺, can be present in the water of hydration to provide electrical neutrality. Although the presence of iron in such clay material is preferably avoided to minimize chemical interaction between clay and optional composition components, such cation substitutions in general are immaterial to the use of the clays herein since the desirable physical properties of the clay are not substantially altered thereby.

The layered expandable aluminosilicate smectite clays useful herein are further characterized by a dioctahedral crystal lattice, whereas the expandable magnesium silicate smectite clays have a trioctahedral crystal lattice.

Suitable smectite clays, include, for example, montmorillonite (bentonite), volchonskoite, nontronite, beidellite, hectorite, saponite, sauconite and vermiculite, are commercially available.

Attapulgites are magnesium-rich clays having principles of superposition of tetrahedral and octahedral unit cell elements different from the smectites. An idealized composition of the attapulgite unit cell is given as: (H₂O)₄(OH)₂Mg₅Si₈O₂0₄H₂O. Attapulgite clays are commercially available.

As noted above, the clays employed in the compositions of the present invention contain cationic counter ions such as protons, sodium ions, potassium ions, calcium ions, magnesium ions and the like. It is customary to distinguish between clays on the basis of one cation which is predominately or exclusively absorbed. For example, a sodium clay is one in which the absorbed cation is predominately sodium. Such absorbed cations can become involved in exchange reactions with cations present in aqueous solutions.

Commercially obtained clay materials can comprise mixtures of the various discrete mineral entities. Such mixtures of the minerals are suitable for use in the present compositions. In addition, natural clays sometimes consist of particles in which unit layers of different types of clay minerals are stacked together (interstratification). Such clays are called mixed layer clays, and these materials are also suitable for use herein.

In one embodiment, suspending agent component of the composition of the present invention comprises an inorganic colloid forming clay in an amount that is effective, either alone or in combination with one or more other suspending agents, to impart shear thinning viscosity to the composition, typically in an amount, based on 100 pbw of the composition, of from greater than 0 pbw, more typically from about 0.1 pbw, and even more typically from about 0.5 pbw, to about 10 pbw, more typically to about 5 pbw, and even more typically to about 2.5 pbw, of inorganic colloid forming clay.

In one embodiment, the composition of the present invention comprises, based on 100 pbw of the composition, from greater than 0 to about 10 pbw, more typically from about 0.1 to about 5 pbw, and even more typically from about 0.5 to about 2.5 pbw, of inorganic colloid forming clay.

A fumed silica or clay suspending agent is typically introduced to the liquid medium and mixed to disperse the fumed silica or clay suspending agent in the liquid medium.

In one embodiment, the suspension agent component of the composition of the present invention comprises a rheology modifer polymer. Rheology modifier polymers are polymers used to thicken aqueous compositions. Suitable rheology modifier polymers are known and typically fall within one of three general classes, that is, alkali swellable polymers, hydrogen bridging rheology modifiers, and hydrophobic associative thickeners.

Alkali swellable polymers are pH-responsive polymers that swell when placed in an alkali medium and include, for example, homopolymers and copolymers comprising units derived from ethylenically unsaturated carboxylic acid monomers such as acrylic acid, methacrylic acid, maleic acid.

Suitable hydrogen bridging rheology modifiers include, for example, hydrocolloids such as cellulose and hydrophilic cellulose derivatives, such as carboxymethylcellulose and hydroxyethylcellulose, and natural gums and gum derivatives, such as guar gum, hydroxypropyl guar, xanthan gun, Rheozan, and carrageenan. In one embodiment, the hydrogen bridging rheology modifier is a second water soluble polymer that is different from the incompletely hydrated water soluble polymer component of the composition of the present invention. For example, in an embodiment wherein the incompletely hydrated water soluble polymer is a first polysaccharide polymer, the hydrogen bridging rheology modifier may be a second polysaccharide polymer that is more readily hydrated than the first polysaccharide polymer.

Suitable hydrophobic associative rheology modifiers are known and include hydrophobically modified natural or synthetic polymers that contain both hydrophobic and hydrophilic substituent groups, such as hydrophobically modified cellulose derivatives and polymers having a synthetic hydrophilic polymer backbone, such as a poly(oxyalkylene), such as a poly(oxyethylene) or poly(oxypropylene) backbone and hydrophobic pendant groups, such as (C₁₀-C₃₀) hydrocarbon groups. Nonionic associate thickeners are typically preferred, due to their relative insensitivity to high salt concentrations, and include, for example, PEG-200 glyceryl tallowate, PEG-200 hydrogenated glyceryl palmate, PPG-14 palmeth-60 hexyl dicarbamate, PEG-160 sorbitan triisostearate.

In one embodiment, the suspending agent component of the composition of the present invention comprises a rheology modifier polymer in an amount that is effective, either alone or in combination with one or more other suspending agents, to impart shear thinning viscosity to the composition, typically in an amount, based on 100 pbw of the composition, of from greater than 0 pbw, more typically from about 0.1 pbw, and even more typically from about 1 pbw, to about 10 pbw, more typically to about 5 pbw, of rheology modifier polymer.

In one embodiment, the composition of the present invention comprises, based on 100 pbw of the composition, from greater than 0 to about 10 pbw, more typically from about 0.1 to about 10 pbw, and even more typically from about 1 to about 5 pbw, of rheology modifier polymer.

An rheology modifier suspending agent is typically introduced to the liquid medium and subjected mixing to disperse the rheology modifier polymer in the aqueous medium.

In one embodiment, the composition of the present invention comprises one or more surfactants. As used herein the term "surfactant" means a compound that is capable of lowering the surface tension of water, more typically, a compound selected from one of five classes of compounds, that is, cationic surfactants, anionic surfactants, amphoteric surfactants, zwitterionic surfactants, and nonionic surfactants, as well as mixtures thereof.

Suitable cationic surfactants are known in the art, and include, for example, amine salts, such as, ethoxylated tallow amine, cocoalkylamine, and oleylamine, quaternary ammonium compounds, such as cetyl trimethyl ammonium bromide, myristyl trimethyl ammonium bromide, stearyl dimethyl benzyl ammonium chloride, lauryl/myristryl trimethyl ammonium methosulfate, stearyl octyldimonium methosulfate, dihydrogenated palmoylethyl hydroxyethylmonium methosulfate, isostearyl benzylimidonium chloride, cocoyl benzyl hydroxyethyl imidazolinium chloride, cocoyl hydroxyethylimidazolinium, and mixtures thereof.

Suitable anionic surfactants are known in the art, and include, for example, alkyl sulfate surfactants, such as sodium tridecyl sulfate, alkyl ether sulfate surfactants, such as sodium laureth sulfate, alkyl sulfonate surfactants, such as paraffin sulfonate, alkaryl sufonate surfactants, such as sodium dodecylbenzene sulfonate, alkyl ether sulfonate surfactants, alkyl carboxylate surfactants, such as sodium oleyl carboxylate, alkyl ether carboxylate surfactants, such as sodium laureth carboxylate, alkyl sulfosuccinate surfactants, such as disodium lauryl sulfosuccinate, alkyl ether sulfosuccinate surfactants, such as disodium laureth sulfosuccinate, alkyl phosphate surfactants, such as sodium dialkyl phosphate, glutamate surfactants, isethionate surfactants, taurate surfactants, sarcosinate surfactants, such as ammonium oleoyl sarcosinate, and mixtures thereof.

Suitable amphoteric surfactants are known in the art, and include those surfactants broadly described as derivatives of aliphatic secondary and tertiary amines in which the aliphatic radical can be straight or branched chain and wherein one of the aliphatic substituents contains from about 8 to about 18 carbon atoms and one contains an anionic water solubilizing group such as carboxyl, sulfonate, sulfate, phosphate, or phosphonate. In one embodiment, the amphoteric surfactant comprises at least one compound selected from cocoamphoacetate, cocoamphodiacetate, lauroamphoacetate, and lauroamphodiacetate.

Suitable zwitterionic surfactants are known in the art, and include, for example, those surfactants broadly described as derivatives of aliphatic quaternary ammonium, phosphonium, and sulfonium compounds, in which the aliphatic radicals can be straight or branched chain, and wherein one of the aliphatic substituents contains from about 8 to about 18 carbon atoms and one contains an anionic group such as carboxyl, sulfonate, sulfate, phosphate or phosphonate. Specific examples of suitable zwitterionic surfactants include alkyl betaines, such as cocodimethyl carboxymethyl betaine, lauryl dimethyl carboxymethyl betaine, lauryl dimethyl alpha-carboxy-ethyl betaine, cetyl dimethyl carboxymethyl betaine, lauryl bis-(2-hydroxy-ethyl)carboxy methyl betaine, stearyl bis-(2-hydroxy-propyl)carboxymethyl betaine, oleyl dimethyl gamma-carboxypropyl betaine, and lauryl bis-(2-hydroxypropyl)alpha-carboxyethyl betaine, alkyl amidopropyl betaines, and alkyl sultaines, such as cocodimethyl sulfopropyl betaine, stearyldimethyl sulfopropyl betaine, lauryl dimethyl sulfoethyl betaine, lauryl bis-(2-hydroxy-ethyl)sulfopropyl betaine, and alkylamidopropylhydroxy sultaines.

Suitable nonionic surfactants are known in the art, and include, for example, sorbitan fatty acid esters, such as sorbitan monooleate, alkoxylated sorbitan fatty acid esters, such as polyoxyethylene (20) sorbitan monopalmitate, alkylaryl alkoxylates, such as ethoxylated alkylphenols, alkarylphenol alkoxylates, such as ethoxylated tristryrylphenols, alkoxylated alcohols, such as ethoxylated stearyl alcohol, alkoxylated fatty acids, such as poly(ethylene glycol) monostearates, alkoxylated fatty acid esters, alkoxylated triglycerides, such as polyethoxylated castor oils, alkoxy copolymers, such as ethylene/propylene block copolymers, glycoside surfactants, such as alkylglucosides and alkylpolyglucosides, amine oxides, such as cocamine oxide, alkanolamides, such as cocamide DEA, alkoxylated fatty amines, and mixtures thereof.

In one embodiment, the hydration inhibitor component of the composition of the present invention comprises one or more surfactants selected from cationic surfactants, anionic surfactants, amphoteric surfactants, zwitterionic surfactants, and nonionic surfactants.

In one embodiment, the composition of the present invention comprises, based on 100 pbw of the composition, from greater than 0 to about 60 pbw, more typically from about 2 to about 50 pbw, and even more typically, from about 5 to about 40 pbw, of one or more surfactants.

In one embodiment, the hydration inhibitor component of the composition of the present invention comprises a surfactant, that is, surfactants may be added to the composition of the present invention to, in addition to their known uses as, for example, detergents, emulsifiers, dispersants, and/or wetting agents, inhibit hydration of the water soluble polymer component of the composition.

In one embodiment, the hydration inhibitor component of the composition of the present invention comprises one or more surfactants selected from cationic surfactants, anionic surfactants, amphoteric surfactants, zwitterionic surfactants, and nonionic surfactants, more typically, from cationic surfactants, anionic surfactants, amphoteric surfactants, and zwitterionic surfactants.

In one embodiment, the composition of the present invention comprises one or more surfactants in an amount that is effective, either alone or in combination with one or more other hydration inhibitors, to prevent or to at least inhibit hydration of the polysaccharide, typically in an amount, based on 100 pbw of the composition, of from greater than 0 pbw, more typically from about 2 pbw, and even more typically from about 5 pbw, to about 60 pbw, more typically to about 50 pbw, and even more typically, to about 40 pbw, of surfactant.

In one embodiment, the hydration inhibitor component of the composition of the present invention comprises a water soluble non-surfactant salt. Suitable water soluble non-surfactant salts include organic non-surfactant salts, inorganic non-surfactant salts, and mixtures thereof, as well as polyelectrolytes, such as uncapped polyacrylates, polymaleates, or polycarboxylates, lignin sulfonates or naphthalene sulfonate formaldehyde copolymers. The water soluble non-surfactant salt comprises an cationic component and an anionic component. Suitable cations may be monovalent or multivalent, may be organic or inorganic, and include, for example, sodium, potassium, lithium, calcium, magnesium, cesium, and lithium cations, as well as mono-, di- tri- or quaternary ammonium or pyridinium cation. Suitable anions may be a monovalent or multivalent, may be organic or inorganic, and include, for example, chloride, sulfate, nitrate, nitrite, carbonate, citrate, cyanate acetate, benzoate, tartarate, oxalate, carboxylate, phosphate, and phosphonate anions. Suitable water soluble non-surfactant salts include, for example, non-surfactant salts of multivalent anions with monovalent cations, such as potassium pyrophosphate, potassium tripolyphosphate, and sodium citrate, non-surfactant salts of multivalent cations with monovalent anions, such as calcium chloride, calcium bromide, zinc halides, barium chloride, and calcium nitrate, and non-surfactant salts of monovalent cations with monovalent anions, such as sodium chloride, potassium chloride, potassium iodide, sodium bromide, ammonium bromide, ammonium sulfate, alkali metal nitrates, and ammonium nitrates.

In one embodiment, the composition of the present invention does not comprise any cationic surfactant, anionic surfactant, amphoteric surfactant, or zwitterionic surfactant that is a water soluble salt.

In one embodiment, the composition of the present invention comprises a cationic surfactant, anionic surfactant, amphoteric surfactant, or zwitterionic surfactant, such as, for example, sodium lauryl sulfate, that is a water soluble salt. The amount of surfactant that is a water soluble salt is to be included in the total amount of water soluble salt for purposes of determining the total amount of water soluble salt component of the composition of the present invention.

In one embodiment, the composition of the present invention comprises a pesticide, such as the above described water soluble salts of glyphosate, and/or dicamba, that is a water soluble salt.

In one embodiment, the water soluble non-surfactant salt component of the composition of the present invention comprises an ammonium salt, such as ammonium sulfate, ammonium chloride, ammonium nitrate, monoammoonium phosphate, diammonium phosphate, or a mixture thereof, that is useful as a fertilizer. It is believed that including a fertilizer as a component of the composition of the present invention accelerates uptake of the herbicide by the leaves of the target plants to which the composition is applied, thus enhancing the efficacy of the herbicide.

In one embodiment, the composition of the present invention comprises a water soluble salt in an amount that is effective, either alone or in combination with one or more other hydration inhibitors, to prevent or to at least inhibit hydration of the polysaccharide, typically in an amount, based on 100 pbw of the composition and including the amount of any active ingredient component, such as a pesticidal compound or a fertilizer, of the composition of the present invention that is a water soluble non-surfactant salt and the amount of any of the surfactant component of the composition of the present invention that is a water soluble salt, of from greater than 0 pbw, more typically, from about 2 pbw and even more typically, from about 5 pbw, to about 70 pbw, more typically to about 65 pbw and even more typically, to about 60 pbw, of water soluble salt.

In one embodiment, the composition of the present invention comprises, based on 100 pbw of the composition and including the amount of any active ingredient component, such as a pesticide and/or a fertilizer, of the composition of the present invention that is a water soluble non-surfactant salt and the amount of any of the surfactant component of the composition of the present invention that is a water soluble salt, from greater than 0 to about 70 pbw, more typically, from about 2 to about 65 pbw and even more typically, from about 5 to about 60 pbw, of water soluble salt.

In one embodiment, the hydration inhibitor component of the composition of the present invention comprises a water dispersible organic liquid. Suitable water dispersible organic liquids include, for example, (C₁-C₁₈)alcohols, such as, for example, monohydric alcohols, such as methanol, ethanol, isopropanol, cetyl alcohol, stearyl alcohol, benzyl Alcohol, oleyl alcohol, and polyhydric alcohols, such as, for example, 2-butoxyethanol, ethylene glycol, and glycerol, alkylether diols such as, for example, ethylene glycol monoethyl ether, propylene glycol monoethyl ether, and diethylene glycol monomethyl ether, and mixtures thereof.

In one embodiment, the hydration inhibitor component of the composition of the present invention comprises a water dispersible, more typically, water soluble, organic liquid. Suitable water dispersible organic liquids include, for example, monohydric alcohols, polyhydric alcohols, alkylether diols, and mixtures thereof.

In one embodiment, the composition of the present invention comprises a water dispersible organic liquid, in an amount that is effective, either alone or in combination with one or more other hydration inhibitors, to prevent or to at least inhibit hydration of the polysaccharide, typically in an amount, based on 100 pbw of the composition, of from greater than 0 pbw, more typically from about 2 pbw, and even more typically, from about 5 pbw to about 40 pbw, more typically to about 30 pbw, and even more typically to about 25 pbw, of water dispersible organic liquid.

In one embodiment, the composition of the present invention comprises, based on 100 pbw of the composition, from greater than 0 to about 40 pbw, more typically from about 2 to about 30 pbw, and even more typically, from about 5 to about 25 pbw, of water dispersible organic liquid.

In one embodiment, the liquid medium of the composition of the present invention is an aqueous medium that comprises water, or a mixture of water and a water miscible organic liquid.

In one embodiment, the liquid medium of the composition of the present invention is a non-aqueous medium that comprises a water immiscible organic liquid, a water miscible organic liquid, or mixture thereof.

In one embodiment wherein the liquid medium of the composition of the present invention comprises a water immiscible organic liquid, the composition further comprises and emulsifier. Suitable emulsifiers comprise one or more surfactants useful for emulsifying the organic liquid with water. Suitable surfactants are those described above.. More typically, suitable emulsifiers comprise one or more surfactants selected from anionic surfactants, such as alkyl sulfates, alkoxylated alkyl sulfates, alkaryl sulfonates, and phosphate esters, amphoteric surfactants, such as alkyl betaines and alkylamido betaines, non-ionic surfactants, such as sorbitan fatty acid esters, aryl alkoxylates, alkoxylated fatty alcohols, alkoxylated fatty acids, alkoxylated fatty acid esters, alkoxylated triglycerides, alkoxy copolymers, alkylpolyglucosides, alkoxylated fatty amines, and ether amines, as well as mixtures of any of such surfactants,.

In one embodiment, the emulsifier comprises one or more nonionic surfactants. In one embodiment, the emulsifier comprises one or more anionic surfactants. In one embodiment, the emulsifier comprises a mixture of one or more nonionic surfactants and one or more nonionic surfactants.

In one embodiment, the composition of the present invention comprises, based on 100 parts by weight of the composition:
greater than 0 pbw, or greater than or equal to about 10 pbw, or greater than or equal to about 30 pbw an aqueous liquid medium comprising a mixture of water, and a water immiscible organic liquid and, optionally, a water miscible organic liquid,
an emulsifier for emulsifying the liquid medium, more typically one or more emulsifiers comprising a nonionic surfactant, even more typically comprising a nonionic surfactant selected from sorbitan fatty acid esters , alkoxylated sorbitan fatty acid esters, alkylaryl alkoxylates, alkarylphenol alkoxylates, alkoxylated alcohols, alkoxylated fatty acids, alkoxylated fatty acid esters, alkoxylated triglycerides, alkoxy copolymers, glycoside surfactants, amine oxides, alkanolamides, alkoxylated fatty amines, and mixtures thereof, in an amount effective to emulsify the water and water immiscible organic liquid, more typically from greater than 0 pbw, or from about 2 pbw, to about 8 pbw or to about 6 pbw, of the surfactant,
from about 25 pbw to about 55 pbw of a pesticide, more typically of a water insoluble pesticide, even more typically of a water insoluble pesticide selected from chlorothalonil, nicosulfuron, tebuconazole, cypermethrin, azoxystrobin, atrazine, copper oxychloride, metamitron, carbendazim, diuron, and mixtures thereof, dispersed or dissolved in the liquid medium,
from greater than 0 pbw, or from about 0.1 pbw, or from about 1 pbw, or from about 1.5 pbw, or from about 2 pbw, or from greater than 2.5 pbw, or from about 3 pbw, or from about 4 pbw, to about 30 pbw, or to about 25 pbw, or to about 20 pbw, or to about 15 pbw, or to about 12 pbw, of a first water soluble polymer, more typically a water soluble polymer selected from water soluble polysaccharide polymers and water soluble non-polysaccharide polymers, and even more typically a water soluble polymer selected from polyacrylamide polymers, non-derivatized guars, derivatized guars, and mixtures thereof, wherein such water soluble polymer is incompletely hydrated, more typically wherein at least a portion of the water soluble polymer is in the form of particles of the water soluble polymer and wherein at least a portion of such particles is dispersed, more typically, suspended, in the liquid medium,
from 0 pbw, or from greater than 0 pbw, from about 0.1 pbw, or from about 0.2 pbw, or from about 0.5 pbw, to about 10 pbw, or to about 5 pbw, of a suspending agent selected from silicas, inorganic colloidal or colloid-forming particles, rheology modifier polymers, second water soluble polymers other than the selected first water soluble polymer, and mixtures thereof dissolved or dispersed in the liquid medium, and
from 0 pbw, or from greater than 0 pbw, from about 2 pbw, or from about 5 pbw, to about 30 pbw or to about 15 pbw, or to about 10 pbw, of a hydration inhibitor hydration inhibitor selected from surfactants, water soluble non-surfactant salts other than the water soluble pesticide salts, water dispersible organic liquids, and mixtures thereof dissolved or dispersed in the liquid medium,
wherein the composition is in the form of an emulsion, a microemulsion, or a suspoemulsion.
Wherein the composition is obtainable by the method of mixing the pesticide with the water, mixing the water soluble polymer with the water immiscible organic liquid, and combining the mixture of pesticide and water with the mixture of water soluble polymer and water immiscible organic liquid.

In one embodiment, the composition of the present invention comprises, based on 100 parts by weight of the composition:
from greater than 0 pbw, or greater than or equal to about 10 pbw, or greater than or equal to about 30 pbw of a non-aqueous liquid medium, more typically of a water immiscible organic liquid
from greater than 0 pbw, or from about 2 pbw, or from about 10 pbw, or from about 15 pbw, or from about 25 pbw, to about 70 pbw, or to about 65 pbw, or to about 60 pbw, or to about 55 pbw, of a pesticide, more typically of a water insoluble pesticide, even more typically of a water insoluble pesticide selected from chlorothalonil, nicosulfuron, tebuconazole, cypermethrin, azoxystrobin, atrazine, copper oxychloride, metamitron, carbendazim, diuron, and mixtures thereof, dissolved or dispersed in the non-aqueous liquid medium,
from greater than 0 pbw, or from about 0.1 pbw, or from about 1 pbw, or from about 1.5 pbw, or from about 2 pbw, or from greater than 2.5 pbw, or from about 3 pbw, or from about 4 pbw, to about 30 pbw, or to about 25 pbw, or to about 20 pbw, or to about 15 pbw, or to about 12 pbw, of a water soluble polymer, more typically a water soluble polymer selected from water soluble polysaccharide polymers and water soluble non-polysaccharide polymers, and even more typically a water soluble polymer selected from polyacrylamide polymers, non- derivatized guars, derivatized guars, and mixtures thereof, wherein at least a portion of the water soluble polymer is in the form of particles and at least a portion of such particles are dispersed, more typically, suspended, in the nonaqueous liquid medium,
from 0 pbw, from greater than 0 pbw, or from about 2 pbw, to about 30 pbw or to about 15 pbw, or to about 6 pbw, of one or more emulsifiers, and
from 0 pbw, from greater than 0 pbw, from about 0.1 pbw, or from about 0.2 pbw, or from about 0.5 pbw, to about 10 pbw or to about 5 pbw, of a suspending agent, more typically a suspending agent selected from selected from silicas, inorganic colloidal or colloid-forming particles, dispersed in the non-aqueous liquid medium. Wherein, the composition is obtainable by the method of mixing the pesticide with the water, mixing the water soluble polymer with the water immiscible organic liquid, and combining the mixture of pesticide and water with the mixture of water soluble polymer and water immiscible organic liquid.

In one embodiment, the composition of the present invention exhibits dilution thickening behavior, that is, as the composition of the present invention is diluted with water, the viscosity of the viscosity of the composition initially increases with increasing dilution, reaches a maximum value and then decreases with further dilution. The increasing viscosity with increasing dilution corresponds to an increasing concentration of dissolved water soluble polysaccharide as the concentration of the surfactant and or salt component of the composition decreases with increasing dilution.

In one embodiment, the composition of the present invention is prepared on an as needed basis and is sufficiently stable, that is, a quiescent sample of the composition shows no evidence, by visual inspection, of gravity driven separation, such as, separation into layers and/or precipitation of components, such as, for example, precipitation of incompletely hydrated water soluble polymer, from the liquid medium, within the anticipated time period, for example, one hour, more typically two hours, between preparation and use.

In one embodiment, the composition of the present invention exhibits good storage stability and a quiescent sample of the composition shows no evidence, by visual inspection, of gravity driven separation within a given time, such as, for example, one week, more typically, one month, even more typically 3 months, under given storage conditions, such as, for example, at room temperature.

In one embodiment, the composition of the present invention exhibits good storage stability and a quiescent sample of the composition shows no evidence, by visual inspection, of gravity driven separation within a given time, such as, for example, 24 hours, more typically, four days, even more typically, one week, under accelerated aging conditions at an elevated storage temperature of up to, for example, 54°C, more typically, 45°C.

The composition of the present invention may optionally further comprise other adjuvants, such as for example, chelating agents, antifoam agents, such as, silicone antifoam agents and oil based antifoam agents, wetting agents, dispersing agents, and pH adjusting agents.

The composition of the present invention is typically made by mixing the components of the composition together.

In one embodiment, wherein the liquid medium is an aqueous medium that comprises water or water and a water miscible organic liquid, the composition is typically made by:
mixing the pesticide and any optional hydration inhibitor with the aqueous liquid medium,
mixing the water soluble polymer with the mixture of aqueous liquid medium, pesticide, and, if used, the optional hydration inhibitor, and
mixing any optional suspending agent with the mixture of the aqueous liquid medium, the pesticide, the optional hydration inhibitor, if used, and the water soluble polymer. This manner of addition avoids hydration of the water soluble polymer and avoids the risk formation of an intermediate composition having an intractably high viscosity.

In another embodiment, wherein the liquid medium is an aqueous medium comprising water and a water immiscible organic liquid, the composition is typically made by:
mixing the pesticide, optionally, all or a portion of the emulsifier, and optionally, a suspending agent, with the water,
mixing the water soluble polymer, optionally all or a portion of the emulsifier, and optionally, a suspending agent, with the water immiscible organic liquid, and
combining the water-based mixture and the water immiscible organic liquid-based mixture to form the composition. The emulsifier may be added to either the water mixture or the water immiscible organic liquid mixture, or a portion of the emulsifier may be added to each of the mixtures. If the optional suspending agent is used, all of the suspending agent may all be added to the water, all of the suspending agent may be added to the water immiscible organic liquid, or a first portion of the suspending agent may be added to the water and a second portion of the suspending agent added to the water immiscible organic liquid. Any optional hydration inhibitor that may be used in addition to the water immiscible organic liquid may be added to either the water or the water immiscible organic liquid. This manner of addition avoids hydration of the water soluble polymer and avoids the risk formation of an intermediate composition having an intractably high viscosity.

In one embodiment, the concentrated pesticide composition of the present invention is diluted with water, typically in a ratio of from 1:10 to 1:100 parts by weight pesticide concentrate composition: parts by weight water to form a dilute pesticide composition for spray application to target plants.

Optionally, other components, such as additional pesticide, polymer, surfactants, fertilizer, and/or other adjuvants, may be added to the dilute pesticide composition.

In one embodiment, the pesticide composition of the present invention is applied, in dilute form, to foliage of a target plant at a rate of from about 0.25 pint, more typically about 0.5 pint, to about 5 pints, even more typically from about 1 pint to about 4 pints, as expressed in terms of the above described pesticide concentrate embodiment of the pesticide composition of the present invention (that is, comprising, based on 100 pbw of such composition, up to about 70 pbw, more typically from about 10 to about 60 pbw, more typically from about 25 to about 55 pbw, pesticide) per acre.

In one embodiment, the pesticide composition is spray applied in dilute form via conventional spray apparatus to foliage of one or more target plants present on an area of ground at a rate of from about 1 gallon to about 20 gallons, more typically about 3 gallons to 20 gallons, of the above described diluted pesticide composition per acre of ground.

Herbicidal compositions are used to control a very wide variety of plants worldwide and can, when applied to the target plant in a herbicidally effective amount, control one or more target plant species of one or more of the following genera: Abutilon, Amaranthus, Artemisia, Asclepias, Avena, Axonopus, Borreria, Brachiaria, Brassica, Bromus, Chenopodium, Cirsium, Commelina, Convolvulus, Cynodon, Cyperus, Digitaria, Echinochloa, Eleusine, Elymus, Equisetum, Erodium, Helianthus, Imperata, Ipomoea, Kochia, Lolium, Malva, Oryza, Ottochloa, Panicum, Paspalum, Phalaris, Phragmites, Polygonum, Portulaca, Pteridium, Pueraria, Rubus, Salsola, Setaria, Sida, Sinapis, Sorghum, Triticum, Typha, Ulex, Xanthium and Zea, including annual broadleaf species such as, for example, velvetleaf (*Abutilon theophrasti*)*,* pigweed (*Amaranthus* spp.), buttonweed (*Borreria* spp.), oilseed rape, canola, indian mustard, etc. (*Brassica* spp.), commelina (*Commelina* spp.), filaree (*Erodium* spp.), sunflower (*Helianthus* spp.), morningglory (*Ipomoea* spp.), kochia (*Kochia scoparia*), mallow (*Malva* spp.), wild buckwheat, smartweed, etc. (*Polygonum* spp.), purslane (*Portulaca* spp.), russian thistle (*Salsola* spp.), sida (*Sida* spp.), wild mustard (*Sinapis arvensis*) and cocklebur (*Xanthium* spp.), annual narrowleaf species such as for example, wild oat (*Avena fatua*), carpetgrass (*Axonopus* spp.), downy brome (*Bromus tectorum*), crabgrass (*Digitaria* spp.), barnyardgrass (*Echinochloa crus-galli*), goosegrass (*Eleusine indica*), annual ryegrass (*Lolium multiflorum*), rice (*Oryza sativa*), ottochloa (*Ottochloa nodosa*), bahiagrass (*Paspalum notatum*), canarygrass (*Phalaris* spp.), foxtail (*Setaria* spp.), wheat (*Triticum aestivum*) and corn (*Zea mays*), perennial broadleaf species such as, for example, mugwort (*Artemisia* spp.), milkweed (*Asclepias* spp.), canada thistle (*Cirsium arvense*), field bindweed (*Convolvulus arvensis*) and kudzu (*Pueraria* spp.), perennial narrowleaf species such as for example, brachiaria (*Brachiaria* spp.), bermudagrass (*Cynodon dactylon*), yellow nutsedge (*Cyperus esculentus*), purple nutsedge (*C. rofundus*)*,* quackgrass (*Elymus repens*), lalang (*Imperata cylindrica*), perennial ryegrass (*Lolium perenne*), guineagrass (*Panicum maximum*), dallisgrass (*Paspalum dilatatum*), reed (*Phragmites* spp.), johnsongrass (*Sorghum halepense*) and cattail (*Typha* spp.), and other perennial species such as, for example, horsetail (*Equisetum* spp.), bracken (*Pteridium aquilinum*), blackberry (*Rubus* spp.) and gorse (*Ulex europaeus*).

The concentrated pesticide composition of the present invention typically exhibits good stability and handling properties, including low viscosity, and can be readily diluted with water to form efficacious aqueous pesticide compositions that may be spray applied to target pests.

### Reference Example 1 and Comparative Example C1

The composition of Reference Example 1 was an aqueous herbicide composition that contained a pesticide (isopropyl amine salt of glyphosate), a water soluble polysaccharide polymer (hydroxypropyl guar), and a suspending agent (fumed silica). The composition of Comparative Example C1 was analogous to that of Reference Example 1, but lacked the suspending agent component.

The compositions were prepared as follows. 4.9% hydroxypropyl guar having a weight average molecular weight of about 2,000,000 g/mol and a molar substitution of 0.12 was gradually added into 100 mL of an aqueous herbicide solution that contained 30-60 wt% glyphosate as isopropylamine salt and 2-7 wt% surfactant blend, with stirring. A preservative (Proxel™ GXL, Arch Chemicals Inc.) was also added. In the composition of Reference Example 1, a suspending agent (fumed silica (Aerosil™ 200, Evonik DeGussa)) was added with stirring to impart shear thinning properties to the composition.
The stability of each of the compositions was evaluated by allowing a sample of the composition to sit undisturbed in a 20 milliliter (mL) glass vial under room temperature conditions on the lab bench top and visually observing the composition to detect separation of the components of the composition due to gravity. Separation of the components of the composition was taken as evidence of instability. Compositions that did not exhibit separation within a given period of time were characterized as being stable for that period of time. Comparative Example C1 was not stable, with separation, that is, precipitation of incompletely hydrated guar, being observed within a few hours. Reference Example 1 was stable and showed no evidence of precipitation or separation into layers for at least 2 days.

The materials and their relative amounts used to make the compositions of Reference Example 1 and Comparative Example C1 are set forth in TABLE I below and the stability results for Reference Example 1 and Comparative Example C1 are set forth in TABLE I-A below.

**TABLE I. Concentrated Aqueous IPA-Glyphosate Herbicide Compositions**

| **Materials** | **CEX C1 Amount (wt %)** | **Ref. EX 1 Amount (wt %)** |
|---|---|---|
| Aqueous solution of glyphosate - isopropylamine salt (41 wt%) and surfactant | 95% | 94.2% |
| Preservative (Proxel™ GXL, Arch Chemicals Inc.) | 0.1% | 0.1% |
| Hydroxypropyl guar, m.s. 0.12 (Rhodia Inc.) | 4.9% | 4.9% |
| Fumed Silica (Aerosil™ 200, Evonik DeGussa) | --- | 0.8% |

**TABLE I-A**

| | **CEX C1** | **Ref. EX 1** |
|---|---|---|
| **Stability** | Not stable | Stable for at least for two days |

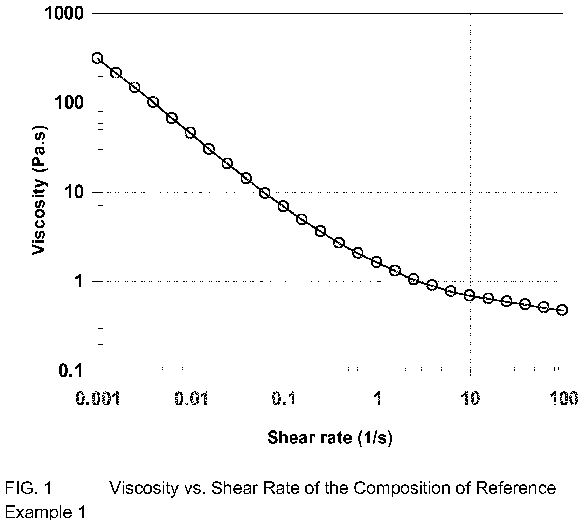

The compositions of Reference Example 1 and comparative Example C1 were subjected to rheological measurements, performed on an AR-G2 stress-controlled rheometer (TA Instruments) using Cross Hatched steel plate geometry equipped with a Peltier-based temperature control. The sample temperature was maintained at 25°C. The steady rate sweep test was applied. A plot of viscosity (in Pascal seconds (Pa.s)) versus shear rate (in reciprocal seconds (1/s)) is shown in FIG. 1. The composition of Reference Example 1 was found to be a shear-thinning system. As shown in FIG. 1, the composition of Reference Example 1 exhibited relatively high viscosity under low shear conditions (e.g., about 70 Pa.s at 10⁻²s⁻¹) which provides resistance to gravity driven separation of the components of the composition during storage, and relatively low viscosity under high shear conditions (e.g., about 0.5 Pa.s at a shear rate of 100 s⁻¹), which renders the composition pumpable and easy to handle under the high shear condition.

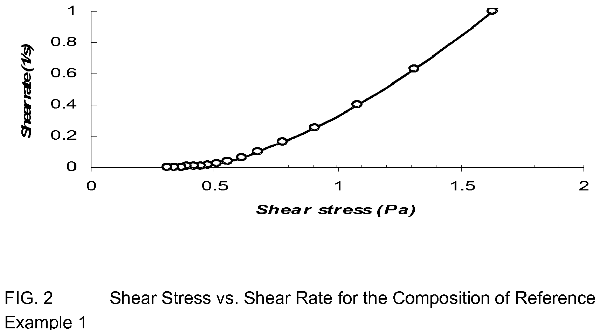

A plot of shear rate (in reciprocal seconds (1/s)) vs. shear stress (in Pascals (Pa)) for the composition of Reference Example 1 is shown in FIG. 2. Based on the shear rate/ shear stress results, the composition of Reference Example 1 was found to have a yield value of about 0.31 Pa.

Samples of the composition of Reference Example 1 were diluted with water. The viscosity of the diluted samples was determined at shear rate 10s⁻¹ using an AR-G2 stress-controlled rheometer (TA Instruments) with Cross Hatched steel plate geometry equipped with a Peltier-based temperature control. The viscosity results are set forth in TABLE II below (in centipoise (cps)). As observed above, the undiluted composition of Reference Example 1 was pumpable. After moderate, i.e., to 2 to 5 times of the original sample volume, dilution with water, the shear viscosity increased significantly relative to the undiluted composition. At relatively high dilution, such as to 10 times the original sample volume, the shear viscosity decreased relative to the undiluted composition.

**TABLE II Viscosity of the Composition of Example 1 and Reference Aqueous Dilutions**

| **Composition** | **Viscosity (cps), at shear rate at 10 s⁻¹** |
|---|---|
| Ref. Ex 1 | 680 |
| Reference 2 X dilution of Ex 1 | 23890 |
| Reference 5 X dilution of Ex 1 | 2334 |
| Reference 10 X dilution of Ex 1 | 177.7 |

### Reference Example 2 and Comparative Example C2

The composition of Reference Example 2 was an aqueous herbicide composition that contained a pesticide (potassium salt of glyphosate), a water soluble polysaccharide polymer (non-derivatized guar), and a suspending agent ( fumed silica). The composition of Comparative Example C1 was analogous to that of Reference Example 1, but lacked the suspending agent component.

The compositions were prepared as follows. 4.2% non-derivatized guar gum having a weight average molecular weight of about 2,000,000 g/mol was gradually added into 100 mL of an aqueous herbicide solution containing 49 wt% glyphosate as potassium salt (Roundup™ Weathermax herbicide composition, Monsanto Company) with stirring. A preservative, Proxel™ GXL was also added. In the composition of Reference Example 2, the suspending agent (fumed silica (Aerosil™ 200, Evonik DeGussa)) was added with stirring to impart shear thinning properties to the composition.

The stability of each of the compositions was evaluated by in a manner analogous to that described above in regard to Reference Example 1 and comparative Example C1 by allowing a sample of the composition to sit undisturbed in a 20 mL glass vial under room temperature conditions on the lab bench top and visually observing the composition to detect separation of the components of the composition due to gravity.

The materials and their relative amounts used to make the compositions of Reference Example 1 and Comparative C1 and the stability results for each of Reference Example 1 and Comparative Example C1 are set forth in TABLE III below.

**TABLE III Concentrated Aqueous Potassium Glyphosate Herbicide Compositions**

| **Materials** | **CEX C2 Amount (wt %)** | **Ref. EX 2 Amount (wt %)** |
|---|---|---|
| Aqueous 49 wt% solution of glyphosate potassium salt (Roundup™ Weathermax herbicide, Monsanto Company) | 95.7 | 95 |
| Preservative (Proxel™ GXL, Arch chemicals Inc.) | 0.1 | 0.1 |
| Non-derivatized Guar (Rhodia Inc.) | 4.2 | 4.2 |
| Fumed Silica (Aerosil™ 200, Evonik DeGussa) | --- | 0.7 |

**TABLE III-A**

| | **CEX C2** | **Ref. EX 2** |
|---|---|---|
| **Stability** | Not stable | Stable at least for two days |

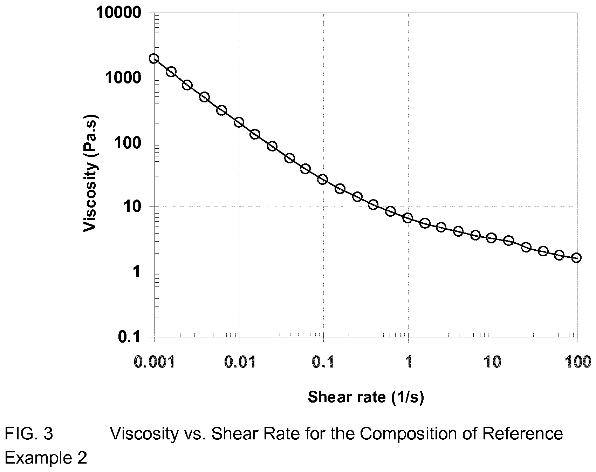

The compositions of Reference Example 2 and comparative Example C2 were subjected to rheological measurements, performed on an AR-G2 stress-controlled rheometer (TA Instruments) using Cross Hatched steel plate geometry equipped with a Peltier-based temperature control. The sample temperature was maintained at 25°C. The steady rate sweep test was applied. A plot of viscosity (in Pascal seconds (Pa.s)) versus shear rate (in reciprocal seconds (1/s)) is shown in FIG. 3. The composition of Reference Example 2 was found to be a shear-thinning system. As shown in FIG. 3, the viscosity Example 2 exhibits relatively high viscosity under low shear conditions (e.g., about 200 Pas at a shear rate of 10⁻² s⁻¹) which provides resistance to gravity driven separation of the components of the composition during storage, and relatively low viscosity under high shear conditions (e.g., about 1.7 Pa.s at a shear ate of 100 s⁻¹), which renders the composition pumpable and easy to handle under high shear conditions.

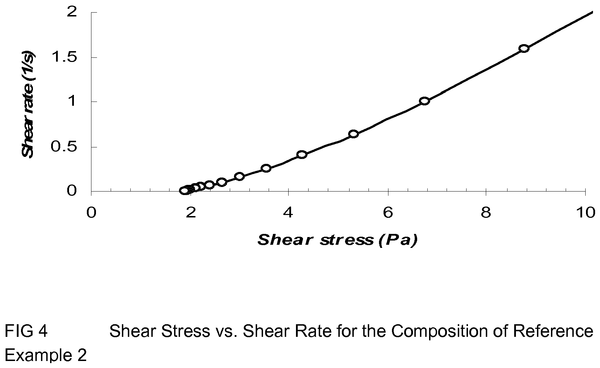

A plot of shear rate (in reciprocal seconds (1/s)) vs. shear stress (in Pascals (Pa)) for the composition of Reference Example 2 is shown in FIG. 4. Based on the shear rate/ shear stress results, the composition of Reference Example 2 was found to have a yield value of about 1.9 Pa.

### Example 3 and Comparative Example C3

The concentrated fungicide composition of Example 3 was an aqueous herbicide composition that contained the following materials in the amounts listed TABLE IV below: a water insoluble fungicide, Tetrachloroisophthalonitrile (Chlorothalonil technical grade, 97.4%, Sipcam), a vegetable oil (rapeseed oil, Phytorob PHT, Ametech), a water miscible organic liquid (propylene glycol, Ametech), a surfactant/emulsifier blend, comprising an polyalkoxylated fatty acid ester (Alkamuls VO/2003, Rhodia Inc., "Surfactant A") an alkoxylated polyarylphenol (Soprophor TSP/461, Rhodia Inc. "Surfactant B"), and an ethoxylated alcohol, (Rhodasurf 860/P, Rhodia Inc. "Surfactant C"), a water soluble polysaccharide polymer (non-derivatized guar, Jaguar 308 NB, Rhodia Inc.), suspending agents I (Xanthan gum, Rhodopol 23, Rhodia inc.) and II (clay, Bentonite AG/8W, Dalcin), a silicone antifoam agent (Rhodorsil 426-R, Blue Star Silicones), and water.

**TABLE IV: Concentrated Tetrachloroisophthalonitrile Composition**

| **Component** | **EX 3 Amount (wt %)** |
|---|---|
| Water insoluble fungicide | 41.12 |
| Non-derivatized guar | 1.20 |
| Water miscible organic liquid | 4.00 |
| Antifoam | 0.16 |
| Surfactant/ Emulsifier blend (Surfactants A, B, and C): | |
| Surfactant A | 1.20 |
| Surfactant B | 2.40 |
| Surfactant C | 0.40 |
| Suspending agent I | 0.08 |
| Vegetable oil | 3.30 |
| Suspending agent II | 0.30 |
| Water | 45.84 |

The composition of Example 3 was made as follows. Part A of the composition contained the components listed in TABLE IV-A below in the relative amounts listed in that TABLE. The components, except Xanthan gum, were blended in a high speed mixer (Ultra-turrax) and the resulting mixture was milled in a Microball mill. The Xanthan gum component was then added and the mixture was mixed until homogeneous. Part B of the composition contained the components listed in TABLE IV-B below in the relative amounts listed in that TABLE. The vegetable oil and emulsifier were mixed, the guar particles were then added to the mixture of oil and emulsifier and the clay was then added, and the composition was mixed. Parts A and B were then mixed together to form the composition of Example 3.

**TABLE IV-A**

| **Component** | **EX 3, Part A Amount (wt%)** |
|---|---|
| Water insoluble fungicide | 43.74 |
| Water miscible organic liquid | 4.26 |
| Antifoam agent | 0.17 |
| Surfactant B | 2.55 |
| Surfactant C | 0.43 |
| Suspending agent I | 0.09 |
| Water | 48.77 |

**TABLE IV-B**

| **Component** | **EX 3, Part B Amount (wt%)** |
|---|---|
| Non-derivatized guar | 20 |
| Vegetable oil | 55 |
| Surfactant A | 20 |
| Suspending agent II | 5 |

The stability of the composition of Example 3 was evaluated by allowing a sample of the composition to sit undisturbed in 50 mL glass containers at 45°C and visually observing the composition to detect separation of the components of the compositions due to gravity. The results of the stability testing are set forth in TABLE V below. The composition was stable with minimal separation (less than 12%) for at least three months.

**TABLE V**

| **Time** | **Stability at 45C** |
|---|---|
| T = 0 | No separation |
| T = 2 weeks | 5% separation |
| T = 1 month | 5% separation |
| T = 3 months | 12% separation |

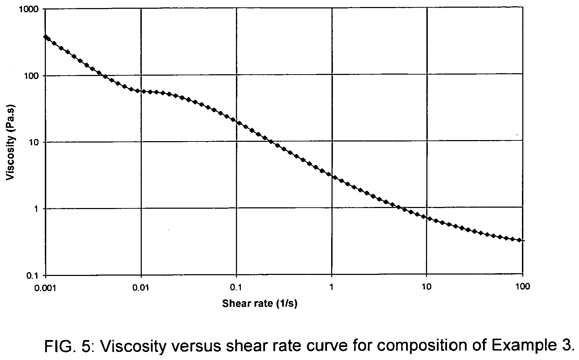

The composition of Example 3 was subjected to rheological measurements using an AR2000 stress-controlled rheometer (TA Instruments) with a 40 mm diameter cross-hatched plate geometry. The sample temperature was maintained at 25°C. FIG. 5 shows the viscosity of the composition of Example 3 as a function of shear rate. The composition of Example 3 exhibited shear-thinning behavior, with a viscosity of 18.62 Pa. at a shear rate of 0.11 s⁻¹, and a viscosity of 0.32 Pa.s at a shear rate of 92 s⁻¹.

The composition of Comparative Example C3 was an attempt to make a composition analogous to the composition of Example 3 by simply combining all of the same components as in Example 3 and mixing the components and exhibited an intractably high viscosity.

### Examples 4 and 5

The compositions of Examples 4 and 5 were prepared in the same fashion as Example 3, using the materials in the amounts set forth in TABLE VI below. Concentrated fungicide compositions of the water insoluble fungicides Tebuconazole and Copper Oxychloride were first made and those compositions were mixed with concentrated guar composition described in TABLE IV-B above to form the compositions of Example 4 and 5, respectively. The stability of each of the composition was evaluated by allowing a sample of the composition to sit undisturbed in a 50 mL glass container at 45°C and visually observing the composition to detect separation of the components of the compositions due to gravity. The viscosity of each of the compositions was measured at room temperature using a Brookfield viscometer equipped with a RV2 spindle at 20 revolutions per minute ("rpm"). Each of the compositions was flowable and stable with minimal separation for at least 2 months. The materials and their relative amounts used to make the compositions of Examples 4 and 5 are set forth in TABLE VI below and the stability and viscosity are set forth in TABLE VI-A below.

**TABLE VI: Concentrated Tebuconazole and Copper Oxychloride Compositions**

| **Material** | **EX 4 Amount (wt %)** | **EX 5 Amount (wt %)** |
|---|---|---|
| 1-(4-Chlorophenyl)-4,4-dimethyl-3-(1,2,4-triazol-1-ylmethyl)pentan-3-ol (Tebuconazole, technical grade, 97%) | 23.8 | - |
| Copper Oxychloride (Technical grade, 57% copper content) | - | 45.58 |
| Non-derivatized guar (Jaguar 308NB, Rhodia Inc) | 0.93 | 0.27 |
| Vegetable oil (Phytorob PHT ) | 2.55 | 0.75 |
| Water miscible organic liquid (propylene glycol, Ametech) | 5.56 | 3.4 |
| Antifoam agent (Rhodorsil 426-R, Blue Star Silicones) | 0.19 | 0.07 |
| Surfactant/ Emulsifier blend (Surfactants A, B, C, and D): | | |
| Surfactant A (polyalkoxylated fatty acid ester, Alkamuls VO/2003, Rhodia Inc.) | 0.93 | 0.27 |
| Surfactant B (alkoxylated polyarylphenol, Soprophor TSP/461, Rhodia inc.) | 2.78 | - |
| Surfactant C (ethoxylated alcohol, Rhodasurf 860/P, Rhodia Inc.) | 0.46 | - |
| Surfactant D (Ethoxylated Polyarylphenol Phosphate, Soprophor FR, Rhodia inc.) | - | 2.04 |
| Suspending agent (Xanthan gum, Rhodopol 23, Rhodia inc.) | 0.15 | - |
| Suspending agent (Succinoglycan gum , Rheozan) | - | 0.07 |
| Suspending agent (Bentonite clay, Bentonite AG/8W) | 0.23 | 0.07 |
| Water | 62.44 | 47.48 |

**TABLE VI-A**

| Stability | Stable, ≤ 15% separation for ≥ 2 months at 45°C | Stable, ≤ 8% separation for ≥ 2 months at 45°C |
|---|---|---|
| Viscosity (RT, Brookfield viscometer, spindle RV2 @ 20 rpm) | 0.74 Pa.s | 1.46 Pa.s |

### Examples 6 and 7

The compositions of Examples 6 and 7 were made using the materials in the amounts set forth in TABLE VII below, as follows. Water insoluble pesticide (Nicosulfuron for Example 6 and Tebuconazole for Example 7) and guar powders were added into a mixture of vegetable oil and emulsifier. The mixture was then milled in a Microball mill for about 30 minutes. A suspending agent (Attagel clay) was then added in the milled solution to stabilize the formulation. The stability of each of the composition was evaluated by allowing a sample of the composition to sit undisturbed in a 50 mL glass container at 45°C and visually observing the composition to detect separation of the components of the compositions due to gravity. The viscosity of each of the compositions was measured at room temperature using a Brookfield viscometer equipped with a RV2 spindle at 20 revolutions per minute ("rpm") Each of the compositions was flowable and stable with minimal separation (less than or equal to 6%) for at least 1 month. The materials and their relative amounts used to make the compositions of Examples 6 and 7, the stability and viscosity are set forth in TABLE VII-A below.

**TABLE VII: Concentrated Nicosulfuron and Tebuconazole Compositions**

| **Material** | **EX 6 Amount (wt %)** | **EX 7 Amount (wt %)** |
|---|---|---|
| 1-(4,6-Dimethoxypyrimidin-2-yl)-3-(3-dimethylcarbamoyl-2-pyridylsulfonyl)urea (Nicosulfuron, technical grade, 95%, Helm G) | 4.4 | - |
| 1-(4-Chlorophenyl)-4,4-dimethyl-3-(1,2,4-triazol-1-ylmethyl)pentan-3-ol (Tebuconazole, technical grade, 97%, Nufarm) | - | 6.4 |
| Non-derivatized guar (Jaguar 308NB, Rhodia Inc) | 6.2 | 6.2 |
| Suspending agent (clay , Attagel 40) | 6.2 | 6.2 |
| Vegetable oil (Phytorob PHT ) | 67.7 | 65.7 |
| Surfactant/Emulsifier: Surfactant A (polyalkoxylated fatty acid ester, Alkamuls VO/2003, Rhodia Inc.) | 15.4 | 15.4 |

**TABLE VII-A**

| | **EX 6** | **EX 7** |
|---|---|---|
| Stability | Stable, ≤ 5% separation for ≥ 1 month at 45°C | Stable, ≤ 6% separation for ≥ 1 month at 45°C |
| Viscosity (RT, Brookfield viscometer, spindle RV2 @ 20 rpm) | 0.6 Pa.s | 0.3 Pa.s |

### Example 8

The composition of Example 8 was made using the materials in the amounts set forth in TABLE VIII below, as follows. Water insoluble insecticide Cypermethrin and emulsifier I were mixed together. Water was slowly added to the mixture and mixed to form a homogeneous solution. The composition thus obtained was mixed with concentrated guar composition of TABLE IV-B above to form the composition of Example 8. The stability of the composition was evaluated by allowing a sample of the composition to sit undisturbed in a 50 mL glass container at 45°C and visually observing the composition to detect separation of the components of the compositions due to gravity. The viscosity of the composition was measured at room temperature using a Brookfield viscometer equipped with a RV2 spindle at 20 revolutions per minute ("rpm") The compositions was flowable and stable with minimal separation (less than or equal to 5%) for at least 1 month. The materials and their relative amounts used to make the composition of Example 8, the stability and viscosity are set forth in TABLE VIII-A below.

**TABLE VIII: Concentrated Cypermethrin Composition**

| **Material** | **EX 8 Amount (wt %)** |
|---|---|
| Cypermethrin, technical grade, 92% | 10.9 |
| Surfactant/Emulsifier blend (Surfactants A and E): | |
| Surfactant A (polyalkoxylated fatty acid ester, Alkamuls VO/2003, Rhodia Inc.) | 3 |
| Surfactant E (Ethoxylated castor oil, Alkamuls OR/36, Rhodia Inc.) | 10 |
| Non-derivatized guar (Jaguar 308NB, Rhodia Inc) | 3 |
| Suspending agent (Bentonite clay, Bentonite AG/8W) | 0.75 |
| Vegetable oil (Phytorob PHT) | 8.25 |
| Water | 64.1 |

**TABLE VIII-A**

| | **EX 8** |
|---|---|
| Stability | Stable, ≤ 5% separation for ≥ 1 month at 45°C |
| Viscosity (RT, Brookfield viscometer, spindle RV2 @ 20 rpm) | 0.45 Pa.s |

## Claims

1. A composition comprising a pesticide, an incompletely hydrated water soluble polymer suspended in an aqueous liquid medium, a suspending agent, an emulsifier and a hydration inhibitor,
wherein the polymer is a deposition aid for the pesticide and is present in an amount of from greater than 0 parts by weight to 30 parts by weight,
wherein the polymer is a polysaccharide polymer or a poly(acrylamide) polymer,
wherein the aqueous liquid medium comprises water and a water immiscible organic liquid,
wherein the suspending agent is selected from fumed silica, inorganic colloidal or colloid-forming particles, rheology modifier polymers, and mixtures thereof, and is present from greater than 0 parts by weight to 10 parts by weight,
wherein the hydration inhibitor is selected from surfactants, water soluble non-surfactant salts, water dispersible organic liquids, and mixtures thereof, and is present in an amount of from greater than 0 to 70 parts by weight,
wherein the pesticide is present from 25 parts by weight to 55 parts by weight,
wherein the composition is obtainable by the following method:
mixing the pesticide with the water,
mixing the water soluble polymer with the water immiscible organic liquid, and
combining the mixture of pesticide and water with the mixture of water soluble polymer and water immiscible organic liquid to form the composition;
wherein all amounts are based on 100 parts by weight of the composition.

2. The composition of claim 1, wherein the water soluble polymer is a non-derivatized guar polymer or a derivatized guar polymer.

3. The composition of claim 1, wherein at least a portion of the incompletely hydrated water soluble polymer is in the form of particles of the water soluble polymer.

4. The composition of claim 1, wherein:
the water soluble polymer is selected from non-derivatized guar polymers, derivatized guar polymers, and mixtures thereof, and
the suspending agent is selected from fumed silicas, inorganic colloidal or colloid-forming particles, rheology modifier polymers, water soluble polysaccharide polymers other than the non-derivatized or derivatized guar polymer, and mixtures thereof.

5. The composition of claim 1, wherein:
the pesticide is a water soluble pesticide salt, and
the hydration inhibitor is selected from surfactant compounds, water soluble non-surfactant salts other than the water soluble pesticide salt, water dispersible organic liquids, and mixtures thereof.

6. The composition of claim 1, wherein the composition comprises, based on 100 pbw of the composition, greater than or equal to 2 pbw of the pesticide and from 0.1 pbw to 15 pbw of the water soluble polymer and the composition exhibits a viscosity of less than 10 Pa.s at a shear rate of greater than or equal to 10 s⁻¹.

7. The composition of claim 1, wherein the pesticide is present in an amount of, based on 100 parts by weight of the composition, from greater than 0 to 70 parts by weight, wherein the polymer is a guar polymer having a weight average molecular weight of from 100,000 to 5,000,000 grams per mole and is present in an amount of from greater than 2.5 to 8 parts by weight, wherein the liquid medium is aqueous, and wherein said composition exhibits:
(a) a viscosity of greater than or equal to 5 Pa.s at a shear rate of less than 0.01 s⁻¹, and
(b) a viscosity of less than 5 Pa.s at a shear rate of greater than 10 s⁻¹.

8. A method for making a composition comprising a pesticide, an incompletely hydrated water soluble polymer suspended in an aqueous liquid medium, a suspending agent, wherein the liquid medium is an aqueous liquid medium that comprises water and a water immiscible organic liquid the and composition further comprises an emulsifier for emulsifying the water and water immiscible liquid, wherein the method comprises:
mixing the pesticide and, optionally, all or a portion of the emulsifier with the water,
mixing the water soluble polymer and, optionally all or a portion of the emulsifier, with the water immiscible organic liquid, and
combining mixture of pesticide and water with the mixture of water soluble polymer and water immiscible organic liquid to form the composition.

## Patentansprüche

1. Zusammensetzung, umfassend ein Pestizid, ein unvollständig hydriertes wasserlösliches Polymer suspendiert in einem wässrigen Flüssigkeitsmedium, ein Suspendiermittel, einen Emulgator und einen Hydrationshemmer,
wobei das Polymer eine Abscheidungshilfe für das Pestizid ist und in einer Menge größer als 0 Gewichtsanteile bis 30 Gewichtsanteile vorhanden ist,
wobei das Polymer ein Polysaccharid-Polymer oder ein Poly(acrylamid)-Polymer ist,
wobei das wässrige Flüssigkeitsmedium Wasser und eine mit Wasser unvermischbaren organischen Flüssigkeit umfasst,
wobei das Suspendiermittel ausgewählt ist aus pyrogenem Siliciumdioxid, anorganischen kolloidalen oder Kolloid-bildenden Partikeln, Rheologie-Modifizierungspolymeren und Gemischen davon, und mit größer als 0 Gewichtsanteile bis 10 Gewichtsanteile vorhanden ist,
wobei der Hydrationshemmer ausgewählt ist aus Tensiden, wasserlöslichen Nicht-Tensidsalzen, in Wasser dispergierbaren organischen Flüssigkeiten und Gemischen davon, und in einer Menge größer als 0 bis 70 Gewichtsanteile vorhanden ist,
wobei das Pestizid von 25 Gewichtsanteilen bis 55 Gewichtsanteilen vorhanden ist,
wobei die Zusammensetzung durch das folgende Verfahren erlangt werden kann:
Mischen des Pestizids mit dem Wasser,
Mischen des wasserlöslichen Polymers mit der mit Wasser unvermischbaren organischen Flüssigkeit und
Kombinieren des Gemischs aus Pestizid und Wasser mit dem Gemisch aus wasserlöslichem Polymer und mit Wasser unvermischbarer organischer Flüssigkeit, um die Zusammensetzung zu bilden;
wobei alle Mengen auf 100 Gewichtsanteilen der Zusammensetzung beruhen.

2. Zusammensetzung nach Anspruch 1, wobei das wasserlösliche Polymer ein nicht-derivatisiertes Guar-Polymer oder ein derivatisiertes Guar-Polymer ist.

3. Zusammensetzung nach Anspruch 1, wobei mindestens ein Teil des unvollständig hydrierten wasserlöslichen Polymers in der Form von Partikeln des wasserlöslichen Polymers ist.

4. Zusammensetzung nach Anspruch 1, wobei:
das wasserlösliche Polymer ausgewählt ist aus nicht-derivatisierten Guar-Polymeren, derivatisierten Guar-Polymeren und Gemischen davon, und
das Suspendiermittel ausgewählt ist aus pyrogenen Siliciumdioxiden, anorganischen kolloidale oder Kolloid-bildenden Partikeln, Rheologie-Modifizierungspolymeren, anderen wasserlöslichen Polysaccharid-Polymeren als das nicht-derivatisierte oder derivatisierte Guar-Polymer und Gemischen davon.

5. Zusammensetzung nach Anspruch 1, wobei:
das Pestizid ein wasserlösliches Pestizidsalz ist, und
der Hydrationshemmer ausgewählt ist aus Tensidverbindungen, anderen wasserlöslichen nicht-Tensidsalzen als das wasserlösliche Pestizidsalz, in Wasser dispergierbaren organischen Flüssigkeiten und Gemischen davon.

6. Zusammensetzung nach Anspruch 1, wobei die Zusammensetzung beruhend auf 100 Gewichtsanteilen der Zusammensetzung mehr als oder gleich wie 2 Gewichtsanteile des Pestizids und von 0,1 Gewichtsanteilen bis 15 Gewichtsanteilen des wasserlöslichen Polymers umfasst, und die Zusammensetzung eine Viskosität von weniger als 10 Pa.s bei einer Scherrate größer als oder gleich wie 10 s⁻¹ aufweist.

7. Zusammensetzung nach Anspruch 1, wobei das Pestizid in einer Menge von beruhend auf 100 Gewichtsanteilen der Zusammensetzung größer als 0 bis 70 Gewichtsanteile vorhanden ist, wobei das Polymer ein Guar-Polymer mit einem durchschnittlichen Molekulargewicht von 100.000 bis 5.000.000 Gramm pro Mol ist und in einer Menge größer als 2,5 bis 8 Gewichtsanteile vorhanden ist, wobei das Flüssigkeitsmedium wässrig ist, und wobei die Zusammensetzung Folgendes aufweist:
(a) eine Viskosität größer als oder gleich wie 5 Pa.s bei einer Scherrate weniger als 0.01 s⁻¹, und
(b) eine Viskosität weniger als 5 Pa.s bei einer Scherrate größer als 10 s⁻¹.

8. Verfahren zum Herstellen einer Zusammensetzung umfassend ein Pestizid, ein unvollständig hydriertes wasserlösliches Polymer suspendiert in einem wässrigen Flüssigkeitsmedium, ein Suspendiermittel, wobei das Flüssigkeitsmedium ein wässriges Flüssigkeitsmedium ist, das Wasser und eine mit Wasser unvermischbare organische Flüssigkeit umfasst, und die Zusammensetzung ferner einen Emulgator zum Emulgieren des Wassers und der mit Wasser unvermischbaren Flüssigkeit umfasst, wobei das Verfahren Folgendes umfasst:
Mischen des Pestizids und optional des ganzen oder eines Teils des Emulgators mit dem Wasser,
Mischen des wasserlöslichen Polymers und, optional des ganzen oder eines Teils des Emulgators mit der mit Wasser unvermischbaren organischen Flüssigkeit, und
Kombinieren des Gemischs aus Pestizid und Wasser mit dem Gemisch aus wasserlöslichem Polymer und mit Wasser unvermischbaren organischen Flüssigkeit, um die Zusammensetzung zu bilden.

## Revendications

1. Composition comprenant un pesticide, un polymère soluble dans l'eau incomplètement hydraté en suspension dans un milieu liquide aqueux, un agent de mise en suspension, un émulsifiant et un inhibiteur d'hydratation,
ledit polymère étant un adjuvant de dépôt pour le pesticide et étant présent en une quantité allant de plus de 0 parties en poids à 30 parties en poids,
ledit polymère étant un polymère de polysaccharide ou un polymère de poly(acrylamide),
ledit milieu liquide aqueux comprenant de l'eau et un liquide organique non miscible à l'eau,
ledit agent de mise en suspension étant choisi parmi la silice sublimée, les particules inorganiques colloïdales ou formant colloïde, les polymères modificateurs de rhéologie, et des mélanges de ceux-ci, et étant présent en une quantité allant de plus de 0 parties en poids à 10 parties en poids,
ledit inhibiteur d'hydratation étant choisi parmi les tensioactifs, les sels non tensioactifs solubles dans l'eau, les liquides organiques dispersibles dans l'eau, et des mélanges de ceux-ci, et étant présent en une quantité allant de plus de 0 à 70 parties en poids,
ledit pesticide étant présent en une quantité allant de 25 parties en poids à 55 parties en poids,
ladite composition pouvant être obtenue par le procédé suivant :
mélange du pesticide à de l'eau,
mélange du polymère soluble dans l'eau au liquide organique non miscible dans l'eau, et
combinaison du mélange de pesticide et d'eau au mélange de polymère soluble dans l'eau et de liquide organique non miscible dans l'eau pour former la composition ;
toutes les quantités étant par rapport à 100 parties en poids de la composition.

2. Composition selon la revendication 1, ledit polymère soluble dans l'eau étant un polymère de guar non dérivé ou un polymère de guar dérivé.

3. Composition selon la revendication 1, au moins une partie du polymère soluble dans l'eau incomplètement hydraté se présentant sous la forme de particules du polymère soluble dans l'eau.

4. Composition selon la revendication 1 :
ledit polymère soluble dans l'eau étant choisi parmi les polymères de guar non dérivés, les polymères de guar dérivés, et des mélanges de ceux-ci, et
ledit agent de mise en suspension étant choisi parmi les silices sublimées, les particules inorganiques colloïdales ou formant colloïde, les polymères modificateurs de rhéologie, les polymères de polysaccharide solubles dans l'eau différents du polymère de guar dérivé ou non dérivé, et des mélanges de ceux-ci.

5. Composition selon la revendication 1 :
ledit pesticide étant un sel pesticide soluble dans l'eau, et
ledit inhibiteur d'hydratation étant choisi parmi les composés tensioactifs, les sels non tensioactifs solubles dans l'eau différents du sel pesticide soluble dans l'eau, les liquides organiques dispersibles dans l'eau, et des mélanges de ceux-ci.

6. Composition selon la revendication 1, ladite composition comprenant, par rapport à 100 pep de la composition, au moins 2 pep du pesticide et de 0,1 à 15 pep du polymère soluble dans l'eau et ladite composition présentant une viscosité inférieure à 10 Pa.s à un taux de cisaillement supérieur ou égal à 10 s⁻¹.

7. Composition selon la revendication 1, ledit pesticide étant présent en une quantité, par rapport à 100 parties en poids de la composition, allant de plus de 0 à 70 parties en poids, ledit polymère étant un polymère de guar présentant un poids moléculaire moyen en poids allant de 100000 à 5000000 grammes par mole et étant présent en une quantité allant de plus de 2,5 à 8 parties en poids, ledit milieu liquide étant aqueux, et ladite composition présentant :
(a) une viscosité supérieure ou égale à 5 Pa.s à un taux de cisaillement inférieur à 0,01 s⁻¹, et
(b) une viscosité inférieure à 5 Pa.s à un taux de cisaillement supérieur à 10 s⁻¹.

8. Procédé de fabrication d'une composition comprenant un pesticide, un polymère soluble dans l'eau incomplètement hydraté en suspension dans un milieu liquide aqueux, un agent de mise en suspension, ledit milieu liquide étant un milieu liquide aqueux qui comprend de l'eau et un liquide organique non miscible dans l'eau et ladite composition comprenant en outre un émulsifiant pour mettre en émulsion l'eau et le liquide non miscible à l'eau, ledit procédé comprenant :
le mélange du pesticide et, éventuellement, de la totalité ou d'une partie de l'émulsifiant avec de l'eau,
le mélange du polymère soluble dans l'eau et, éventuellement, de la totalité ou d'une partie de l'émulsifiant, avec le liquide organique non miscible à l'eau, et
la combinaison du mélange de pesticide et d'eau au mélange de polymère soluble dans l'eau et de liquide organique non miscible à l'eau pour former la composition.
